# EUROPEAN PATENT SPECIFICATION

(11) **EP 3 910 449 B1**
(45) Date of publication and mention of the grant of the patent: **26.02.2025**
(21) Application number: 20766233.9
(22) Date of filing: 26.02.2020
(51) Int. Cl.: G06F 3/01

(54) **GESTURE PROCESSING METHOD AND DEVICE**
GESTENVERARBEITUNGSVERFAHREN UND -VORRICHTUNG
PROCÉDÉ ET DISPOSITIF DE TRAITEMENT DE GESTE

(30) Priority: 01.03.2019 CN 201910157644
(43) Date of publication of application: 17.11.2021
(73) Proprietor: Huawei Technologies Co., Ltd., Shenzhen, Guangdong 518129 (CN)
(72) Inventor: HU, Liang, Shenzhen, Guangdong 518129 (CN); XU, Jie, Shenzhen, Guangdong 518129 (CN); CUI, Xiaoying, Shenzhen, Guangdong 518129 (CN)
(74) Representative: Thun, Clemens
(86) International application number: PCT/CN2020/076699
(87) International publication number: WO 2020/177585

(56) References cited:
- EP-A1- 3 133 474
- CN-A- 103 914 126
- CN-A- 104 463 119
- CN-A- 106 484 302
- CN-A- 109 032 359
- CN-A- 110 045 819
- US-A1- 2008 168 403
- US-A1- 2013 082 978
- US-A1- 2013 154 919
- US-A1- 2016 011 672

## Description

### TECHNICAL FIELD

This application relates to the field of electronic technologies, and in particular, to a gesture processing mobile phone.

### BACKGROUND

With intelligent development of electronic devices, there are more interaction manners between a user and an electronic device such as a mobile phone. A mid-air gesture is an interaction form that emerges in recent years.

Generally, a system application of the electronic device supports the mid-air gesture of the user, and a third-party application usually needs to be adapted to the mid-air gesture in advance. For example, the third-party application needs to predefine a correspondence between a mid-air gesture and an application control or instruction in code. In this way, after detecting the mid-air gesture, the electronic device makes a response by using the corresponding application control or instruction.

Currently, there are more types of third-party applications and a larger quantity of third-party applications used by the user on the electronic device. If each third-party application is adapted to the mid-air gesture, an adaptation workload is relatively large. If adaptation is not implemented, the user cannot operate the third-party application by using the mid-air gesture, thereby limiting a use range of the mid-air gesture and affecting user experience of the mid-air gesture.

The document US 2008/0168403 A1 shows a system and method for detecting and interpreting real-world and security gestures on touch and hover sensitive devices.

The document US 2013/0154919 A1 shows a Doppler-effect based user control gesture detection system and method.

The document US 2013/0082978 A1 shows a system and method for omni-spatial gesture recognition.

### SUMMARY

The present invention is defined by the independent claims. Further developments are shown by the dependent claims. In the following, parts of the description and drawings referring to subject matter not covered by the claims are not presented as embodiments of the invention, but as "examples" useful for understanding the invention. The same applies to "embodiments", "embodiments of this application", "solutions" and "technical solutions", unless specifically identified as referring to the claimed invention.

### BRIEF DESCRIPTION OF DRAWINGS

FIG. 1 is a schematic diagram of a hardware structure of a mobile phone according to an embodiment of this application;
FIG. 2 is a schematic diagram of a software structure of a mobile phone according to an embodiment of this application;
FIG. 3(a) and FIG. 3(b) are a flowchart of gesture processing procedures according to an embodiment of this application;
FIG. 4(a) and FIG. 4(b) are a schematic diagram of an operation effect according to an embodiment of this application;
FIG. 5A(a) to FIG. 5A(d) are a schematic diagram of a group of gestures according to an embodiment of this application;
FIG. 5B(a) to FIG. 5B(d) are a schematic diagram of a group of gestures collected by a camera according to an embodiment of this application;
FIG. 5C is a schematic diagram of a group of gestures according to an embodiment of this application;
FIG. 6(a) to FIG. 6(d) are a schematic diagram of a group of interfaces according to an embodiment of this application;
FIG. 7 is a schematic diagram of an interface according to an embodiment of this application;
FIG. 8(a) and FIG. 8(b) are a schematic diagram of another operation effect according to an embodiment of this application;
FIG. 9(a), FIG. 9(b), and FIG. 9(c) are a schematic diagram of another operation effect according to an embodiment of this application;
FIG. 10(a) and FIG. 10(b) are a schematic diagram of another operation effect according to an embodiment of this application;
FIG. 11(a), FIG. 11(b), and FIG. 11(c) are a schematic diagram of another operation effect according to an embodiment of this application;
FIG. 12(a), FIG. 12(b), and FIG. 12(c) are a schematic diagram of another operation effect according to an embodiment of this application;
FIG. 13(a), FIG. 13(b), and FIG. 13(c) are a schematic diagram of another operation effect according to an embodiment of this application;
FIG. 14 is a schematic diagram of an operation mark according to an embodiment of this application;
FIG. 15(a) and FIG. 15(b) are a schematic diagram of a group of operation marks according to an embodiment of this application;
FIG. 16 is a schematic diagram of another operation mark according to an embodiment of this application; and
FIG. 17 is a flowchart of a gesture processing method according to an embodiment of this application.

### DESCRIPTION OF EMBODIMENTS

The following describes the technical solutions in the embodiments of this application with reference to the accompanying drawings in the embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural.

In addition, in the descriptions of this application, "a plurality of" means two or more unless otherwise specified. "At least one of the following" or a similar expression thereof means any combination of these items, including any combination of a single item or a plurality of items. For example, at least one of a, b, or c may represent a, b, c, a and b, a and c, b and c, or a and b and c. Herein, a, b, and c may be singular or plural.

When using an electronic device such as a mobile phone, it may be inconvenient for a user to be in direct contact with the electronic device through a hand to perform an operation. For example, when the hand of the user is wet, oily, or dirty, it is inconvenient for the user to be in direct contact with the electronic device through the hand. For another example, when the user wears gloves because it is cold outdoors, it is inconvenient for the user to be in direct contact with the electronic device through the hand. For another example, the user lies on a bed to watch a mobile phone, and the mobile phone is mounted on a bed head by using a support and is distant from the hand of the user. Alternatively, in a vehicle-mounted case, the electronic device is distant from the user, and it is inconvenient for the user to directly operate the electronic device through the hand.

In this case, the user may operate the electronic device by using a mid-air gesture. The mid-air gesture is a gesture operation performed when the hand of the user is not in contact with the electronic device, and a distance between the hand and the electronic device is greater than or equal to a preset distance threshold (for example, 1 cm). The electronic device may collect information such as a shape of the hand of the user and a motion status by using a detection component such as a camera, a touchscreen, an electromagnetic induction component (for example, may be disposed below a display of the electronic device), an infrared sensor (for example, may be disposed below the display of the electronic device), or an ultrasonic sensor (for example, may be disposed below the display of the electronic device), to detect the mid-air gesture. The mid-air gesture may include but is not limited to a static gesture and a dynamic gesture. The static gesture means a posture of the hand at a moment such as finger bending or closing, for example, an OK gesture, a V gesture, and a five-finger spreading gesture. The dynamic gesture means a motion status of the hand within a period of time, and includes a moving direction, a speed, a hand posture change, and the like, for example, a wave gesture, a translational move gesture, a fist gesture, and a press gesture.

An embodiment of this application provides a gesture processing method performed by a mobile phone, to generate a corresponding general-purpose input event based on a mid-air gesture. The general-purpose input event is an input event corresponding to a contact operation performed by the user on the electronic device, so that both a system application and a third-party application can respond to the general-purpose input event, that is, can respond to the mid-air gesture. In this way, a use range of the mid-air gesture can be enlarged, and an adaptation work of the third-party application can be omitted. In addition, the third-party application does not need to be adapted to the mid-air gesture in advance, thereby reducing an adaptation workload.

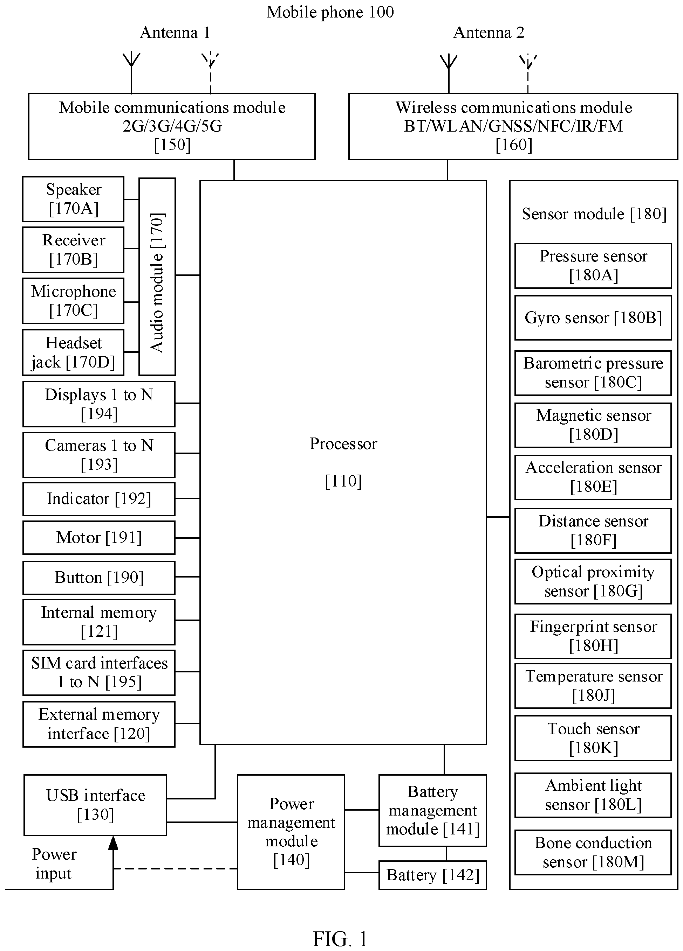

According to the present invention, the electronic device is a mobile phone. FIG. 1 is a schematic structural diagram of a mobile phone 100. The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the mobile phone 100. In some other embodiments of this application, the mobile phone 100 may include more or fewer components than those shown in the figure, combine some components, split some components, or have different component arrangements. However, the mobile phone according to the present invention comprises at least a processor, a memory, a display, and a touch sensor, wherein the touch sensor and the display form a touchscreen. The components shown in the figure may be implemented by using hardware, software, or a combination of software and hardware. In accordance with the present invention, the mobile phone 100 further includes an infrared sensor, an ultrasonic sensor, an electromagnetic induction component, or the like, and is configured to: detect an air gesture, and send collected data information of the air gesture to the processor, to obtain gesture information of the air gesture.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the mobile phone 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call by using the Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured through software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the mobile phone 100, may be configured to transmit data between the mobile phone 100 and a peripheral device, or may be configured to connect to a headset to play audio by using the headset. Alternatively, the interface may be configured to connect to another electronic device, for example, an AR device.

It may be understood that an interface connection relationship between the modules shown in the embodiments of this application is merely an example for description, and does not constitute a limitation on the structure of the mobile phone 100. In some other embodiments of this application, the mobile phone 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive wireless charging input by using a wireless charging coil of the mobile phone 100. The charging management module 140 supplies power to the mobile phone 100 by using the power management module 141 while charging the battery 142.

The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a quantity of battery cycles, and a battery health status (electric leakage or impedance).

In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented through the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the mobile phone 100 may be configured to cover one or more communication bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communications module 150 may provide a wireless communication solution that includes 2G/3G/4G/5G or the like and that is applied to the mobile phone 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave through the antenna 1 for radiation.

In some embodiments, at least some functional modules of the mobile communications module 150 may be disposed in the processor 110. In some embodiments, at least some functional modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video through the display 194.

In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the mobile phone 100. The wireless communications module 160 may be one or more components integrated into at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, in the mobile phone 100, the antenna 1 and the mobile communications module 150 are coupled, and the antenna 2 and the wireless communications module 160 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The mobile phone 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194, which may also be referred to as a screen 194, may be configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the mobile phone 100 may include one or N displays 194, where N is a positive integer greater than 1.

The mobile phone 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the mobile phone 100 may include one or N cameras 193, where N is a positive integer greater than 1.

The camera may include one or more of an RGB camera, an infrared camera, a depth camera, and the like. In some embodiments, the camera may be configured to: detect an air gesture, and send collected data information of the air gesture to the processor, to obtain gesture information of the air gesture. For example, the data information may be collected image information of the air gesture.

The digital signal processor is configured to process a digital signal, and may process another digital signal in addition to the digital image signal. For example, when the mobile phone 100 selects a frequency, the digital signal processor is configured to perform Fourier transform on frequency energy, and the like.

The video codec is configured to: compress or decompress a digital video. The mobile phone 100 may support one or more video codecs. In this way, the mobile phone 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the mobile phone 100, such as image recognition, facial recognition, voice recognition, and text understanding, can be implemented by using the NPU.

In some embodiments, the NPU or another processor may obtain the gesture information based on the data information that is of the air gesture and that is sent by a detection component such as the camera, and identify a gesture type or the like based on the gesture information.

The external memory interface 120 may be configured to connect to an external storage card such as a micro SD card, to extend a storage capability of the mobile phone 100. The external storage card communicates with the processor 110 through the external memory interface 120, to implement a data storage function. For example, files such as music and a video are stored in the external storage card.

The internal memory 121 may be configured to store computer executable program code, where the executable program code includes instructions. The processor 110 runs the instructions stored in the internal memory 121, to perform various function applications of the mobile phone 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) created during use of the mobile phone 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The mobile phone 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. The mobile phone 100 may listen to music or answer a hands-free call through the speaker 170A.

The receiver 170B, also referred to as an "earpiece", is configured to convert an audio electrical signal into a sound signal. When a call is answered or voice information is received by using the mobile phone 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound by moving a human mouth close to the microphone 170C to input a sound signal to the microphone 170C. At least one microphone 170C may be disposed in the mobile phone 100.

In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on a capacitance change. When a touch operation is performed on the display 194, the mobile phone 100 detects intensity of the touch operation by using the pressure sensor 180A. The mobile phone 100 may also calculate a touch location based on a detection signal of the pressure sensor 180A.

In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on a Messages icon, an instruction for creating a new SMS message is executed.

The gyro sensor 180B may be configured to determine a moving posture of the mobile phone 100. In some embodiments, an angular velocity of the mobile phone 100 around three axes (namely, x, y, and z axes) may be determined by using the gyro sensor 180B. The gyro sensor 180B may be configured to implement image stabilization during photographing. For example, when a shutter is pressed, the gyro sensor 180B detects an angle at which the mobile phone 100 jitters, obtains, through calculation based on the angle, a distance for which a lens module needs to compensate, and allows a lens to cancel the jitter of the mobile phone 100 through reverse motion, to implement image stabilization. The gyro sensor 180B may be further used in a navigation scenario and a motion-sensing game scenario.

The acceleration sensor 180E may detect values of acceleration in various directions (usually on three axes) of the mobile phone 100. When the mobile phone 100 is still, a value and a direction of gravity may be detected. The acceleration sensor 180E may be further configured to identify a posture of the mobile phone 100, and is applied to an application such as switching between landscape mode and portrait mode or a pedometer.

The distance sensor 180F is configured to measure a distance. The mobile phone 100 may measure a distance through infrared light or a laser. In some embodiments, in a photographing scenario, the mobile phone 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The mobile phone 100 emits infrared light through the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, so as to automatically turn off a screen for power saving. The optical proximity sensor 180G may also be used in a leather case mode or a pocket mode to automatically unlock or lock the screen.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the mobile phone 100 is in a pocket to prevent an accidental touch.

The fingerprint sensor 180H is configured to collect a fingerprint. The mobile phone 100 may use a feature of the collected fingerprint to implement fingerprint unlocking, application lock access, fingerprint-based photographing, fingerprint-based call answering, and the like.

The touch sensor 180K is also referred to as a "touch panel". The touch sensor 180K is disposed on the display 194, and the touch sensor 180K and the display 194 form a touchscreen. The touch sensor 180K is configured to detect a touch operation performed on or near the touch sensor 180K. The touch sensor may transfer a detected touch operation to the application processor, to determine a type of a touch event. The display 194 may provide a visual output related to the touch operation.

In some other embodiments, the touchscreen may be configured to: detect an air gesture, and send collected data information of the air gesture to the processor, to obtain gesture information of the air gesture.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or plugged from the SIM card interface 195, to implement contact with or separation from the mobile phone 100. The mobile phone 100 may support one or N SIM card interfaces, where N is a positive integer greater than 1. The SIM card interface 195 may support a nano SIM card, a micro SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may also be compatible with the external storage card. The mobile phone 100 interacts with a network by using the SIM card, to implement functions such as calling and data communication. In some embodiments, the mobile phone 100 uses an eSIM, namely, an embedded SIM card. The eSIM card may be embedded in the mobile phone 100, and cannot be separated from the mobile phone 100.

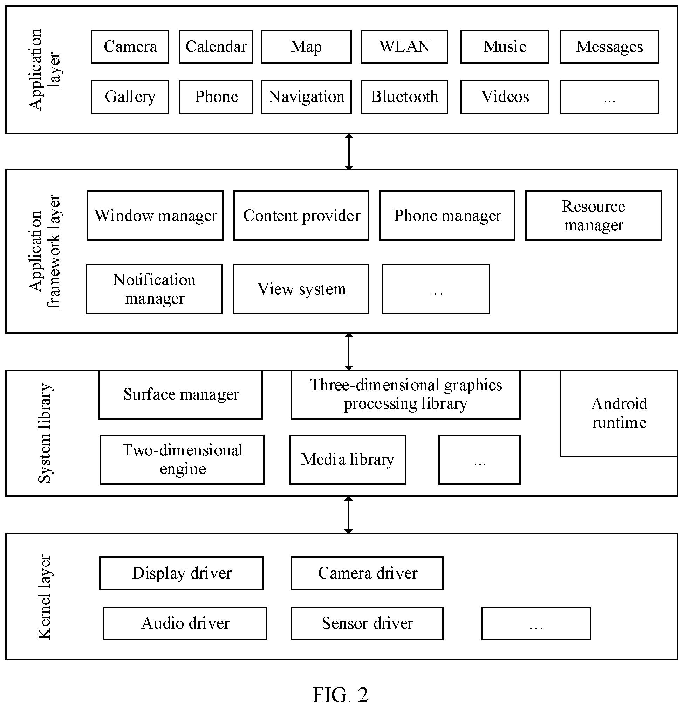

FIG. 2 is a block diagram of a software structure of the mobile phone 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data and make the data accessible to the application. The data may include a video, an image, an audio, calls that are made and received, a browsing history and a bookmark, an address book, and the like.

The view system includes visual controls such as a control for displaying a text and a control for displaying a picture. The view system may be configured to construct an application. A display interface may include one or more views. For example, a display interface including a Messages notification icon may include a text display view and a picture display view.

The phone manager is configured to provide a communication function of the mobile phone 100, for example, management of a call status (including answering or declining).

The resource manager provides various resources for an application, such as a localized character string, an icon, a picture, a layout file, and a video file.

The notification manager enables an application to display notification information in a status bar, and may be configured to convey a notification message. The notification manager may automatically disappear after a short pause without user interaction. For example, the notification manager is configured to provide notifications of download completing, a message prompt, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, vibration is generated, or the indicator light blinks.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording of a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In this embodiment of this application, the general-purpose input event that is generated by the mobile phone based on the mid-air gesture and to which both the system application and the third-party application can directly respond may be an input event corresponding to the contact operation performed by the user on the mobile phone. In particular, the general-purpose input event generated by the mobile phone based on the mid-air gesture is an input event corresponding to a touch operation performed by the user on the touchscreen. In an example not covered by the invention, the electronic device may be a device having a button (for example, a mobile phone or a notebook computer having a button), and the general-purpose input event generated by the electronic device based on the mid-air gesture may be an input event corresponding to an operation performed by the user on the button. In another example, the electronic device may be a device used in cooperation with a mouse, and the general-purpose input event generated by the electronic device based on the mid-air gesture may be an input event corresponding to an operation such as clicking or scrolling of the mouse by the user. In a further example, the electronic device may be a device used in cooperation with a touchpad (for example, a notebook computer), and the general-purpose input event generated by the electronic device based on the mid-air gesture may be an input event corresponding to a touch operation performed by the user on the touchpad.

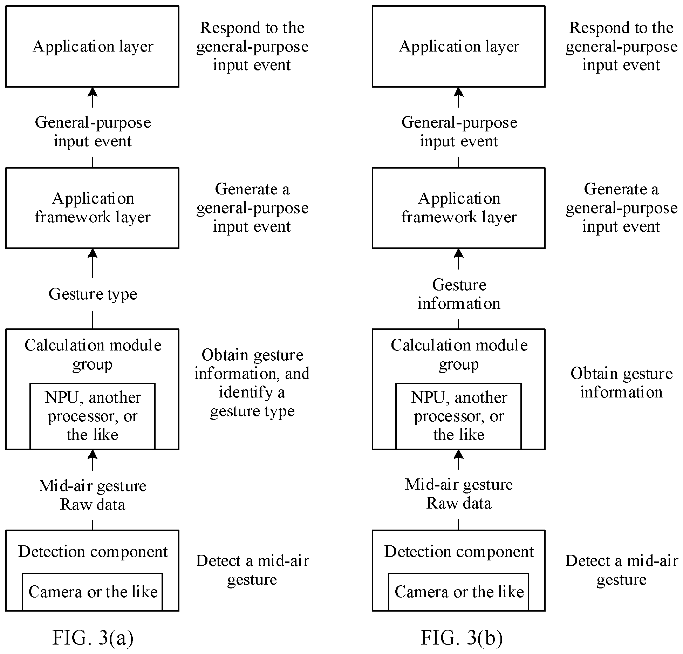

In some embodiments of this application, in FIG. 3(a), a calculation module such as an NPU or another processor may obtains gesture information based on data information that is of a mid-air gesture and that is collected by a camera, a touchscreen, an infrared sensor, an ultrasonic sensor, an electromagnetic induction component, or another detection component (for example, an external component such as Leap Motion) of the mobile phone 100; and perform gesture identification based on the gesture information, to determine a gesture type. The calculation module reports the gesture type to an application framework layer. The application framework layer determines, based on a preset correspondence between the gesture type and a general-purpose input event, the general-purpose input event corresponding to the gesture type reported by the calculation module, and reports the general-purpose input event to an application layer. In other words, the application framework layer generates the general-purpose input event. The general-purpose input event is generally defined by an operating system, and may be generated when the user is in contact with a mobile phone to perform an operation. Both the system application and the third-party application can directly respond to the input event. A related application at the application layer (for example, a foreground application) can respond to the general-purpose input event and perform a corresponding function. The related application may be the system application, or may be the third-party application.

In some other embodiments of this application, in FIG. 3(b), a calculation module such as an NPU or another processor may obtain gesture information based on data information that is of a mid-air gesture and that is collected by a detection component; and report the gesture information to an application framework layer. With reference to a preset mapping policy, the application framework layer generates a corresponding general-purpose input event based on the gesture information. The general-purpose input event may be an event described by using a down event, an up event, and/or a move event that are/is generally defined in an electronic device system. In other words, the general-purpose input event may be a down event, an up event, a move event, or a combination of thereof. The application framework layer reports the general-purpose input event to an application layer. A system application or a third-party application at the application layer can respond to the general-purpose input event described by using a down event, an up event, and/or a move event; and perform a corresponding function.

In this way, both the system application and the third-party application can respond to the general-purpose input event generated based on the mid-air gesture (which may also be referred to as the general-purpose input event mapping the mid-air gesture). In other words, both the system application and the third-party application can respond to the mid-air gesture. Therefore, a use range of the mid-air gesture is relatively large, and user experience of the mid-air gesture is relatively good. In addition, the third-party application does not need to be adapted to the mid-air gesture in advance, thereby omitting an adaptation work of the third-party application.

In accordance with the invention, a mobile phone having a touchscreen is used. In this case, a processing process of a touch operation (that is, a contact operation) performed by the user on the touchscreen may include: After the touchscreen detects the touch operation of the user, corresponding hardware sends the touch operation to a kernel layer. The kernel layer processes the touch operation into a general-purpose input event (including information such as touch coordinates and a timestamp of the touch operation). The general-purpose input event is stored at the kernel layer. The application framework layer obtains the general-purpose input event from the kernel layer, and delivers the general-purpose input event to a related application (for example, a foreground application). The related application responds to the general-purpose input event, to respond to the touch operation.

It may be learned from comparison between the processing process of the operation of the mid-air gesture provided in the implementation of this application and the current processing process of the touch operation that the mobile phone may generate, based on the mid-air gesture, the general-purpose input event corresponding to the touch operation performed by the user on the touchscreen. Therefore, both the system application and the third-party application can respond to the general-purpose input event, and both the system application and the third-party application can respond to the mid-air gesture. It may also be understood that the mobile phone simulates, by using the mid-air gesture, the actual touch operation performed by the user on the touchscreen, to generate the general-purpose input event corresponding to the actual touch operation. Therefore, both the system application and the third-party application can respond to the general-purpose input event, and both the system application and the third-party application can respond to the mid-air gesture.

The following embodiment describes the gesture processing method provided in this embodiment of this application performed by a mobile phone having the touchscreen, wherein the general-purpose input event generated by the mobile phone based on the mid-air gesture is an input event corresponding to the actual touch event of the user.

In this embodiment of this application, the mobile phone has a mid-air gesture detection function. After the mid-air gesture detection function is enabled, the mobile phone may detect the mid-air gesture of the user by using a detection component such as a camera, a touchscreen, an infrared sensor, or an ultrasonic sensor.

In some embodiments, the mobile phone enables the mid-air gesture detection function by default, and can continuously detect a mid-air gesture in both a screen-on state and a screen-off state of the touchscreen.

For example, a low-power processor in the mobile phone may support the mobile phone in the screen-off state in continuously using the detection component such as a camera, a touchscreen, an infrared sensor, or an ultrasonic sensor to detect whether the mid-air gesture is triggered. For example, the low-power processor may be a sensor hub sensor hub.

In some other embodiments, the mobile phone in the screen-off state disables the mid-air gesture detection function by default.

For example, in a technical solution, in the screen-on state, if the current touchscreen is unlocked, the mobile phone automatically enables the mid-air gesture detection function, to avoid a misoperation caused by detecting the mid-air gesture when the touchscreen is locked.

In another technical solution, if the touchscreen is in the screen-on state, the mid-air gesture detection function is automatically enabled regardless of whether the touchscreen is unlocked. Generally, the touchscreen is in the screen-on state only after a screen-on operation performed by the user is detected. However, usually, when the user performs the screen-on operation on the touchscreen, the user expects to use the mobile phone or the user is concerned about the mobile phone. In this case, the mobile phone may also detect a mid-air gesture actively made by the user, to directly operate the mobile phone by using the mid-air gesture, thereby omitting an operation of unlocking the touchscreen by the user

In some other embodiments, the mobile phone disables the mid-air gesture detection function by default, and enables the mid-air gesture detection function only after detecting an enabling indication of the user. The enabling indication may be a voice indication of the user, an operation of pressing a physical button on the mobile phone by the user, a touch operation performed by the user on the touchscreen, an operation of shaking the mobile phone by the user, or the like.

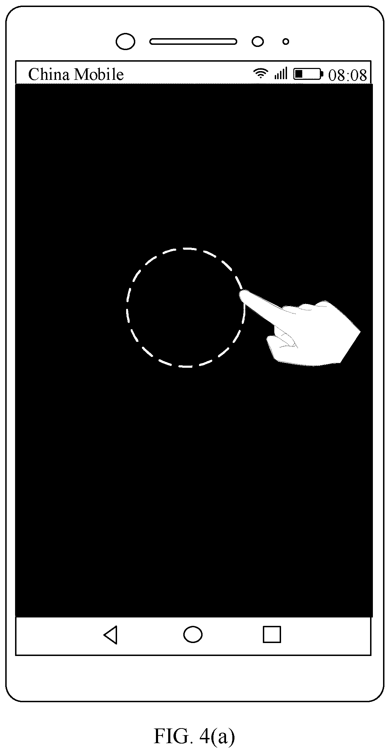

For example, in the screen-off state, the touchscreen of the mobile phone does not display content, but a touch function of the touchscreen is enabled. When a finger of the user slides on the touchscreen, the touchscreen starts to display content, and the displayed content is a sliding gesture track of the user on the touchscreen. With reference to FIG. 4(a), after detecting an operation that the user draws a circular track on the touchscreen, the mobile phone displays the track, and enables the mid-air gesture detection function.

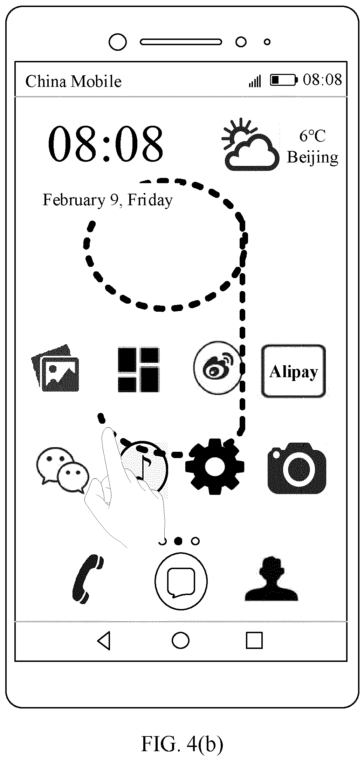

For another example, with reference to FIG. 4(b), in the screen-on state, after detecting an operation that the user draws a "g" track on the touchscreen by using a knuckle, the mobile phone enables the mid-air gesture detection function.

In some other embodiments, by default, the mobile phone enables the mid-air gesture detection function in the screen-on state, and disables the mid-air gesture detection function in the screen-off state. The mobile phone in the screen-off state enables the mid-air gesture detection function only after detecting the enabling indication of the user. If the mobile phone is in the screen-off state, the user may not expect to operate the mobile phone at present. The mobile phone enables the mid-air gesture detection function after detecting the enabling indication of the user, to avoid a misoperation caused by the mid-air gesture and improve operation accuracy.

In some other embodiments, the mobile phone enables the mid-air gesture detection function in the screen-on state by default, and prompts the user whether to continuously enable the mid-air gesture detection function after switching to the screen-off state. After detecting the enabling indication of the user, the mobile phone continuously enables the mid-air gesture detection function.

When the mid-air gesture detection function is enabled, the mobile phone may perform processing such as detecting the mid-air gesture of the user, collecting data information of the mid-air gesture, obtaining gesture information based on the data information, identifying a gesture type based on the gesture information, and generating a general-purpose input event.

In a technical solution, after the mid-air gesture detection function is enabled, the mobile phone continuously performs processing such as collecting data, identifying the gesture type based on the collected data, and generating the general-purpose input event, regardless of whether the user performs a mid-air gesture operation.

In another technical solution, after the mid-air gesture detection function is enabled, if the mobile phone determines that the user triggers the mid-air gesture (or the user triggers mid-air gesture detection), the mobile phone performs processing such as collecting data information of the mid-air gesture of the user, identifying a gesture type based on the data information, and generating a general-purpose input event. Before the mobile phone detects that the user triggers the mid-air gesture, the mobile phone does not perform processing such as identifying the gesture type based on the collected data information, thereby saving computing resources of the mobile phone. The following is described by using this solution as an example.

In some embodiments, if the mobile phone detects the hand of the user and determines that the hand of the user is not in contact with the mobile phone, the mobile phone may determine that the user triggers the mid-air gesture.

There may be a plurality of methods for the mobile phone to detect whether the hand appears. For example, in a solution, when detecting by using the camera whether the hand appears, the mobile phone identifies, by using a neural network algorithm, a picture collected by the camera. The neural network algorithm has been trained in advance. During training, a large quantity of pictures of a hand and a large quantity of labels of a hand are input into a neural network. After the picture collected by the camera is input into the trained neural network, if a label output by the neural network is a label of a hand, the mobile phone determines that the hand of the user is detected. In addition, when the neural network is trained, a large quantity of pictures including a part of a palm (for example, a hand picture including one or more fingertips) may be input into the neural network in advance. In this way, when the palm can be only partially photographed because the hand is relatively close to the camera, the mobile phone can accurately identify the hand by using the neural network.

When it is detected by using the camera whether the hand appears, in another solution, a model of the hand is set on the mobile phone, and the mobile phone matches the model of the hand with the picture of the hand collected by the camera. If a similarity is greater than or equal to 70%, the mobile phone determines that the hand is detected.

For another example, when it is detected by using an infrared sensor whether the hand appears, an infrared emitter may emit an infrared ray, and the infrared ray is reflected by a detected target. An infrared radiation energy distribution graph obtained through reflection of the detected target may be reflected to a photosensitive element of an infrared detector, to obtain an infrared thermal graph. The thermal graph corresponds to a thermal distribution field on a surface of an object. Surfaces of different detected targets correspond to different thermal distribution fields. When the thermal graph of the detected target matches a thermal distribution field of a surface of the hand, the mobile phone may determine that the hand of the user is detected.

In some other embodiments, a detection policy may be further configured on the mobile phone, to reduce an erroneous detection event of the mid-air gesture. For example, in a detection policy, when the hand is not in contact with the mobile phone and a distance between the hand and the mobile phone is less than or equal to a preset value 1 (for example, 20 cm), the mobile phone may determine that the user triggers the mid-air gesture. When a distance between the hand and the mobile phone is greater than a preset value 1, the mobile phone may consider that the user does not trigger the mid-air gesture.

For another example, in another detection policy, when the hand is not in contact with the mobile phone and an area of the hand detected by the mobile phone is greater than or equal to a preset value 2 (for example, 9 cm²), the mobile phone may determine that the user triggers the mid-air gesture. When an area of the detected hand is less than a preset value 2, the mobile phone may consider that the user does not trigger the mid-air gesture.

The distance between the hand and the mobile phone may be a distance between a part of the hand (for example, a center of gravity of the hand, a fingertip of a forefinger, or a part of the hand that is first detected by the mobile phone) and a part of the mobile phone (for example, a central position of the touchscreen); or may be a vertical distance between a part of the hand and a plane on which the touchscreen of the mobile phone is located; or may be another distance. This is not limited in this embodiment of this application.

If the mobile phone detects that the user triggers the mid-air gesture, the mobile phone may collect data information of the mid-air gesture. The data information of the mid-air gesture is data collected by the detection component in an operation process of the mid-air gesture.

For example, when the detection component is a camera, the data information of the mid-air gesture may be a picture that is collected by the camera and that includes the hand of the user; or when the detection component is an infrared sensor, the data information of the mid-air gesture may be emission data, reflection data, and the like of an infrared ray when the infrared sensor detects the hand.

Specifically, the mobile phone may continuously collect the data information of the mid-air gesture after the mid-air gesture is triggered and before the mid-air gesture ends. There may be a plurality of manners for the mobile phone to determine that the mid-air gesture ends. For example, in an embodiment, when the mobile phone no longer detects the hand of the user, the mobile phone determines that the mid-air gesture ends.

For another example, in another embodiment, when determining that the distance between the hand and the mobile phone is greater than or equal to a preset value 3 (for example, 20 cm), the mobile phone determines that the mid-air gesture ends. In still another embodiment, after detecting a voice "End the mid-air gesture" sent by the user, the mobile phone determines that the mid-air gesture ends. In still another embodiment, after detecting an end gesture of the user, the mobile phone determines that the mid-air gesture ends. For example, the end gesture is a "V" gesture, and the mid-air gesture is a gesture of an upward wave of the hand. After completing the mid-air gesture of the upward wave of the hand, the user makes the "V" gesture, to indicate that the mid-air gesture is completed.

For example, the detection component is a camera. The camera may take a picture at a relatively low frame rate (for example, 10 frames per second (fps)), to determine, based on whether the hand appears in the picture, whether the mid-air gesture is triggered. After determining that the hand appears in the picture taken by the camera, the mobile phone determines that the mid-air gesture is triggered. Then, the camera may take a picture at a relatively high frame rate (for example, 60 fps), to collect the data information of the mid-air gesture of the user

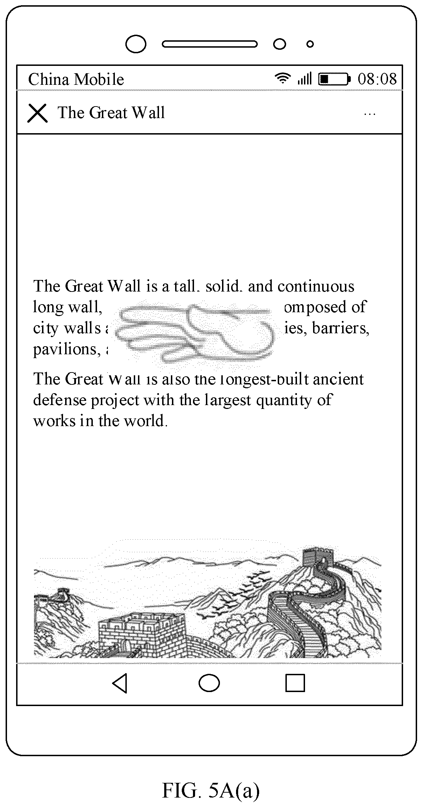

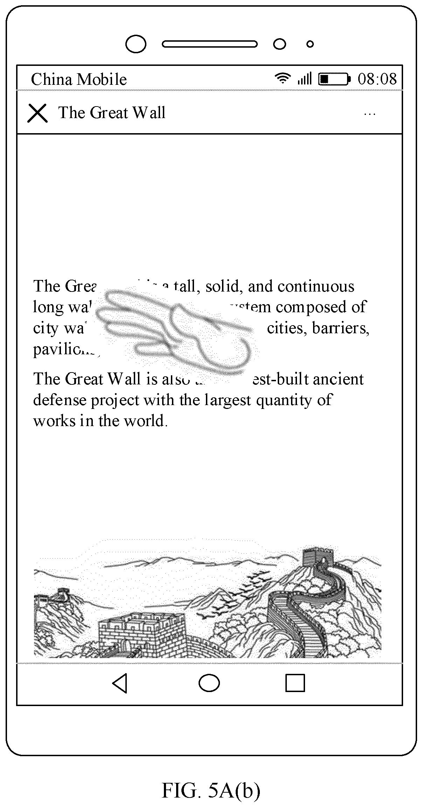

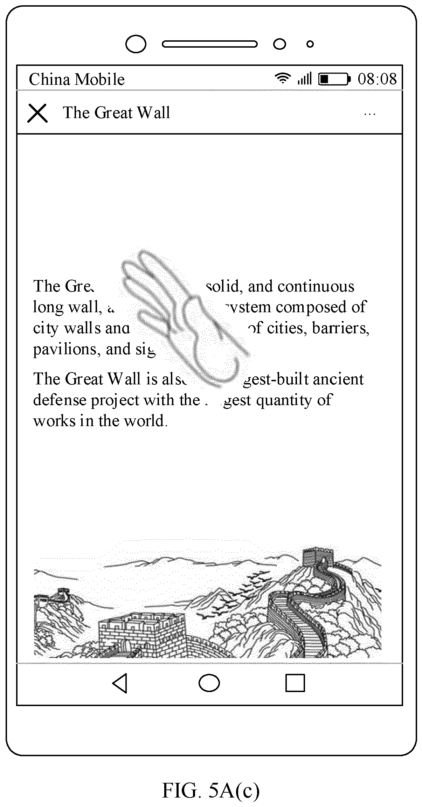

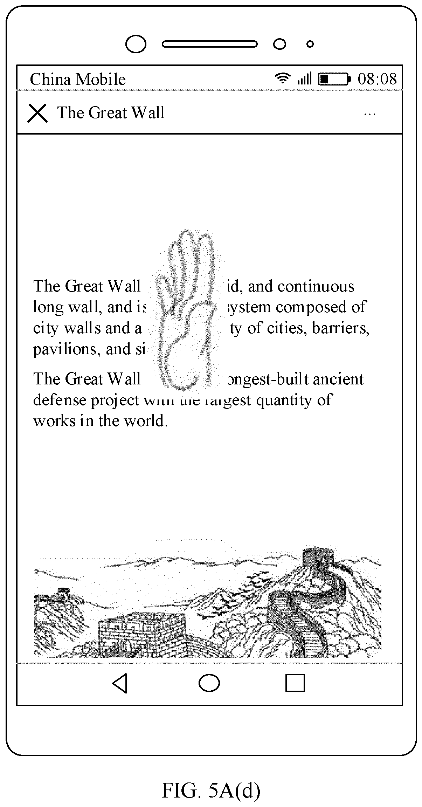

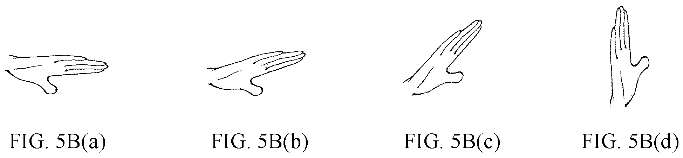

For example, in a process in which the user waves the hand upward shown in FIG. 5A(a) to FIG. 5A(d), the data information collected by the camera may be a picture set in which hand postures and motion statuses dynamically change in FIG. 5B(a) to FIG. 5B(d). When the picture taken by the camera no longer includes the hand, the mobile phone determines that the mid-air gesture ends, and may continue to take a picture at a relatively low frame rate, to further detect whether the mid-air gesture is triggered.

Then, the mobile phone may obtain the gesture information of the mid-air gesture based on the collected data information of the mid-air gesture. The gesture information is used to indicate information such as a posture and a motion status of the mid-air gesture. For example, the gesture information includes any one or more of the following: a posture, a shape, a moving distance, a moving direction, a moving speed, a moving track, or a correspondence between a location and a moment that is of the hand.

The mobile phone may determine a static feature such as a posture or a shape of the hand in the gesture information by using a plurality of methods. For example, the static feature such as a posture or a shape of the hand is determined by using the neural network algorithm on the mobile phone. When the neural network is trained, pictures of a hand with various different postures and shapes and corresponding labels are input into the neural network in advance. When the trained neural network is used to process the picture collected by the camera, static features such as different postures and shapes of the hand may be identified.

For another example, thermal distribution fields of surfaces of a hand with different static features such as postures and shapes are different. The mobile phone may identify the different static features such as postures and shapes of the hand based on a matching status between the thermal graph of the detected target and the thermal distribution fields of the surfaces of the hand with different preset static features such as postures and shapes.

For example, for a mid-air gesture corresponding to a picture set shown in FIG. 5B(a) to FIG. 5B(d), the gesture information obtained by the mobile phone may include: the shape of the hand is a side face of the hand; a moving start location is (x1, y1); a moving end location is (x2, y2); a moving distance is 10 cm; a moving direction is from bottom to top; a moving track is (x1, y1), (x3, y3), (x4, y4), ..., and (x2, y2); a posture of the hand at (x1, y1) is lateral extension of the side face of the hand; a posture of the hand at (x2, y2) is the inclined side face of the hand; a posture of the hand at (x3, y3) is approximately vertical extension of the side face of the hand; a correspondence between a moment and a location; and the like.

After obtaining the gesture information of the mid-air gesture, in an embodiment, the mobile phone may identify the gesture based on the gesture information, to obtain a gesture type of the mid-air gesture.

The gesture type of the mid-air gesture may include but is not limited to a gesture type of a static gesture and a gesture type of a dynamic gesture. For example, the gesture type of the static gesture may include an OK gesture type, a V gesture type, or a five-finger spreading gesture type, and the gesture type of the dynamic gesture may include various types such as waving (for example, upward, downward, leftward, or rightward waving), translational moving, slapping, clutching, or loosening.

The mobile phone may determine the gesture type of the mid-air gesture based on the gesture information such as a posture, a shape, a moving distance, a moving direction, a moving speed, a moving track, or a correspondence between a location and a moment that is of the hand. For example, after determining the static feature such as a posture and a shape of the hand, the mobile phone may determine the gesture type of the static gesture based on the static feature. For the dynamic gesture, the mobile phone may determine the gesture type of the dynamic gesture based on static features such as postures and shapes of the hand at different moments, and/or a motion status such as a moving distance, a moving direction, and a moving speed of the hand.

It should be noted that different users may have different operations for mid-air gestures in the same gesture type, while features of the mid-air gestures are basically consistent. The mobile phone may identify the mid-air gestures in the same gesture type that are made by different users.

For example, for the gesture information obtained from the picture set shown in FIG. 5B(a) to FIG. 5B(d), the mobile phone may determine based on the gesture information that initially, a palm and a wrist are horizontal and fingertips are rightward, and then, the wrist basically does not move and the palm is rotated upward, to determine that a corresponding gesture type is an upward wave.

In some embodiments, if the mobile phone determines that there is no gesture type matching the gesture information, the mobile phone determines that no effective mid-air gesture is identified. In this way, the mobile phone may prompt, in manners of a voice, a vibration, displaying prompt information on a touchscreen, or the like, the user that the current mid-air gesture is ineffective. Alternatively, the user may be prompted, based on an application currently in use or a user habit previously learned and recorded by the mobile phone, about whether the user expects to make a correct mid-air gesture, or the user may be prompted about whether the user expects the mobile phone to perform an operation.

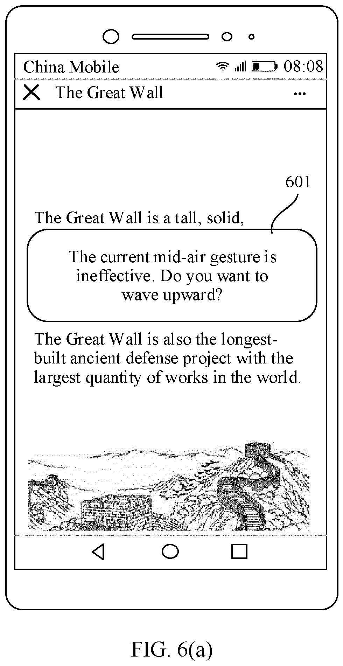

For example, the mobile phone may prompt the user by using a voice: "The mid-air gesture is ineffective. Please make a correct mid-air gesture". For another example, with reference to FIG. 6(a), the mobile phone may display prompt information 601 on the touchscreen: "The current mid-air gesture is ineffective. Do you want to wave your hand upward?". If the mobile phone detects a voice indication of "Yes" input by the user, the mobile phone performs a subsequent step in this embodiment of this application based on the gesture of an upward wave of a hand.

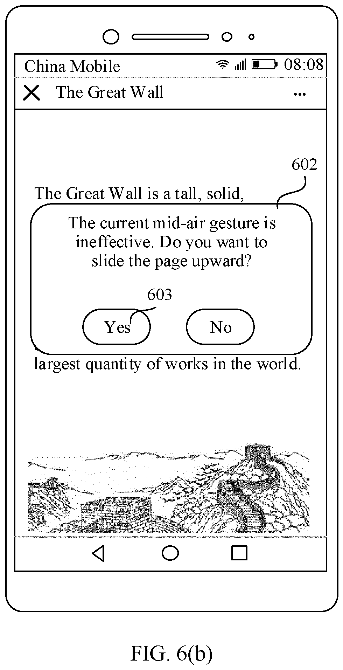

For another example, with reference to FIG. 6(b), the mobile phone may display prompt information 602 on the touchscreen: "The current mid-air gesture is ineffective. Do you want to slide the page upward?". If the mobile phone detects a voice indication of "Yes" input by the user or detects an operation of tapping a control 603 by the user, the mobile phone slides the page upward.

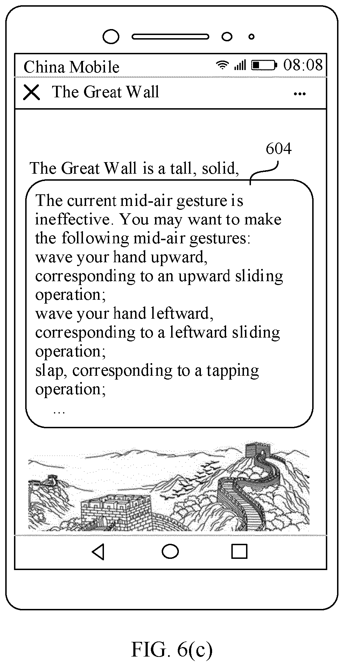

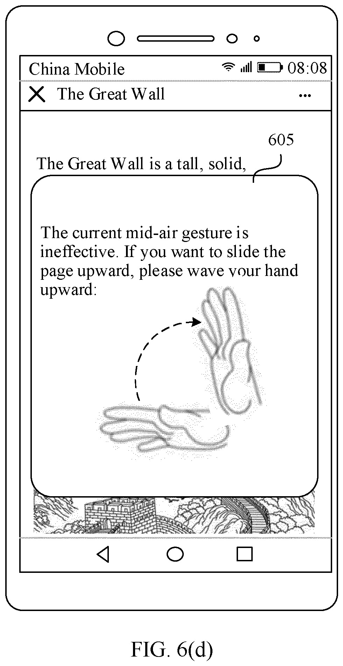

For another example, with reference to FIG. 6(c) or FIG. 6(d), the mobile phone may display, on the touchscreen, text information 604 and/or pictogram information 605 of the mid-air gesture that the user may expect to use.

For another example, the mobile phone may display, on the touchscreen, text information and/or pictogram information of the mid-air gesture corresponding to a general-purpose input event to which a current application interface can respond.

For another example, the mobile phone may display, on the touchscreen, text information and/or pictogram information of an effective mid-air gesture similar to the current ineffective mid-air gesture.

For another example, the mobile phone may display, on the touchscreen, text information and/or pictogram information of one or more effective mid-air gestures that are most frequently used.

After determining the gesture type, the mobile phone generates a corresponding general-purpose input event based on the gesture type. The general-purpose input event is generally defined by an operating system, and may be generated through simulating a case in which the user touches the touchscreen of the mobile phone. Both the system application and the third-party application can directly respond to the input event. For example, the correspondence between the gesture type and the general-purpose input event is preset in the mobile phone. The mobile phone may determine the general-purpose input event corresponding to the gesture type based on the correspondence, to generate the general-purpose input event. Specifically, the application framework layer of the mobile phone may determine, based on the correspondence, the general-purpose input event corresponding to the gesture type, and report the general-purpose input event to the application layer, to generate the general-purpose input event.

For example, Table 1 may be referred to for the correspondence between the gesture type and the general-purpose input event. The wave gesture type corresponds to a sliding event. Herein, the gesture type of the upward wave shown in FIG. 5A(a) to FIG. 5A(d) corresponds to the upward sliding event, the gesture type of the leftward wave corresponds to the leftward sliding event, and a gesture type of a wave in a direction corresponds to a sliding event in the direction.

As shown in Table 1, the slap (that is, moving the palm toward the mobile phone) gesture type corresponds to the tapping event. A gesture type of one slap corresponds to a single tapping event, a gesture type of two consecutive slaps within preset duration corresponds to a double tapping event, and a gesture type of a fast slap corresponds to a press event (that is, an event whose pressing strength is greater than or equal to a preset threshold).

For another example, with reference to Table 1, the OK gesture type corresponds to the single tapping event. The system application and the third-party application may directly respond to a general-purpose input event such as an upward sliding event, a leftward sliding event, or a single tapping event, that is, may respond to the mid-air gesture.

**Table 1**

| Gesture type | | General-purpose input event | |
|---|---|---|---|
| Wave | Upward wave | Sliding event | Upward sliding event |
| | Leftward wave | | Leftward sliding event |
| | ... | | ... |
| Translational move | Downward translational move | Sliding event | Downward sliding event |
| | Rightward translational move | | Rightward sliding event |
| | ... | | |
| Slap | Slap once | Tapping event | Single tapping event |
| | Consecutively slap twice within preset duration | | Double tapping event |
| | Fast slap | | Press event |
| | ... | | ... |
| OK gesture | | Single tapping event | |
| ... | | ... | |

The general-purpose input event that corresponds to the gesture type and that is preset in the mobile phone may be described by using a down event, an up event, and/or a move event. For example, a correspondence between a general-purpose input event and each of a down event, an up event, and/or a move event may be preset in the mobile phone. The sliding event may be described by using a down event, a move event, and an up event. The tapping event may be described by using a down event and an up event. For example, the upward sliding event may be described as follows: receiving a down event, receiving a series of move events, and finally receiving an up event. Herein, a moving direction described by the move event is an upward move.

In another embodiment, the mobile phone may separately store a correspondence between a general-purpose input event and a gesture type of a static gesture, and a correspondence between a general-purpose input event and a gesture type of a dynamic gesture. The user may further indicate (for example, indicate by using a voice) whether the mid-air gesture is a static gesture or a dynamic gesture. When the mobile phone detects that the mid-air gesture indicated by the user is a static gesture, the mobile phone determines a corresponding general-purpose input event based on the correspondence between the general-purpose input event and the gesture type of the static gesture. When the mobile phone detects that the mid-air gesture indicated by the user is a dynamic gesture, the mobile phone determines a corresponding general-purpose input event based on the correspondence between the general-purpose input event and the gesture type of the dynamic gesture, to improve matching accuracy and matching efficiency between a mid-air gesture and a general-purpose input event.

In another embodiment, after determining the gesture type, the mobile phone may generate, based on the gesture type, a general-purpose input event described by using a down event, an up event, and/or a move event. For example, a correspondence between a gesture type and each of a down event, an up event, and/or a move event may be preset in the mobile phone. A wave gesture type may correspond to a general-purpose input event described by using a combination of a down event, a move event, and an up event. A slap gesture type may correspond to a general-purpose input event described by using a combination of a down event and an up event. An OK gesture type may correspond to a general-purpose input event described by using a combination of a down event and an up event. The system application and the third-party application may directly respond to a general-purpose input event described by using a down event, an up event, and/or a move event, that is, may respond to the mid-air gesture. Specifically, the application framework layer of the mobile phone may determine, based on the gesture type, the general-purpose input event described by using a down event, an up event, and/or a move event, and report the general-purpose input event to the application layer, to generate the general-purpose input event.

For example, when the gesture type is three-finger pressing, the mobile phone may generate, based on the three-finger pressing, a multi-point touch event (that is, a general-purpose input event) described by using a down event, an up event, and/or a move event. In other words, a plurality of down events are received at the same time at different locations, and then up events are received at the different locations.

For another example, when the gesture type is a three-finger downward move, the mobile phone may generate a multi-point downward sliding event (that is, a general-purpose input event) described by using a down event, an up event, and/or a move event. For another example, when the gesture type is clutching, the mobile phone may generate a clutching event (that is, a general-purpose input event) described by using a down event, an up event, and/or a move event.

For another example, when the gesture type is loosening, the mobile phone may generate an extension event (that is, a general-purpose input event) described by using a down event, an up event, and/or a move event.

In another embodiment, based on different features such as an amplitude and a speed of a move of the hand, the mid-air gesture may further include another gesture type. The mobile phone may further generate the general-purpose input event that is described by using the down event, the up event, and/or the move event and that corresponds to the another gesture type.

For example, the another gesture type may further include a large-amplitude upward wave and a fast upward wave. When the gesture type is the large-amplitude upward wave, the mobile phone may correspondingly generate a long-distance upward sliding event (that is, a general-purpose input event) described by using a down event, an up event, and/or a move event. When the gesture type is the fast upward wave, the mobile phone may correspondingly generate a fast upward sliding event (that is, a general-purpose input event) described by using a down event, an up event, and/or a move event. The mobile phone may directly respond to a long-distance upward sliding event, a fast upward sliding event, or the like described by using a down event, an up event, and/or a move event, that is, may respond to the mid-air gesture.

When the general-purpose input event corresponding to the gesture type is described by using a down event, an up event, and/or a move event, for example, a preset proportional relationship may exist between an offset of the hand and a moving distance in the move event. When an offset of the hand in an upward wave is greater than a preset value 4 (for example, 15 cm), the mid-air gesture is a gesture of a large-amplitude upward wave. When a moving distance sum in the move event corresponding to the mid-air gesture is greater than a preset value 5 (for example, 3 cm), the general-purpose input event described by using a move event is a long-distance upward sliding event.

For another example, when a moving speed of an upward wave of the hand is greater than a preset value 6 (for example, 1 m/s), the mid-air gesture is a gesture of a fast upward wave. When a moving speed of a move event corresponding to the mid-air gesture is greater than a preset value 7 (for example, 5 cm/s), a general-purpose input event described by using the move event is a fast sliding event.

It should be noted that, because the general-purpose input event generated by the mobile phone based on the gesture type is an input event generated when the user actually touches and operates the mobile phone, it may be said that the mobile phone simulates the mid-air gesture as the actual touch operation of the user, to generate the general-purpose input event corresponding to the actual touch operation of the user.

After generating the general-purpose input event, the mobile phone responds to the general-purpose input event by using a related application. The related application may be a foreground application, or may be an application related to the foreground application, for example, another application to which a current application jumps.

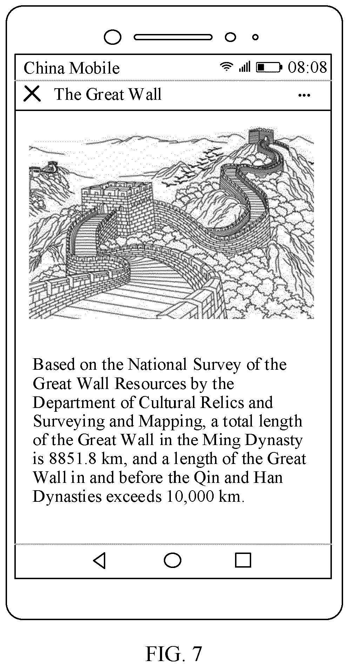

Specifically, the related application may respond to the general-purpose input event according to a preset policy. For example, in a scenario in FIG. 5A(a) to FIG. 5A(d) in which the user browses a web page by using a browser and waves the hand upward, the mobile phone generates an upward sliding event based on a gesture type of an upward wave. As shown in FIG. 7, in response to the upward sliding event, a browser application may scroll up a page. A scrolling page length is 1/3 of a height of the touchscreen. In response to the long-distance upward sliding event and the fast upward sliding event, the browser application may also scroll up a page. Scrolling page lengths may be respectively 2/3 of a height of the touchscreen and the height of the touchscreen.

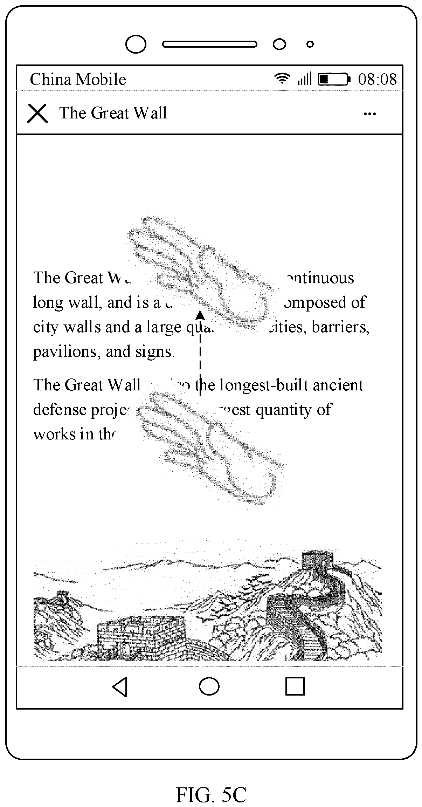

For another example, in a scenario in FIG. 5C in which the user browses a web page by using a browser and transitionally moves the hand upward, the mobile phone generates an upward sliding event based on the gesture type of the upward transitional move. As shown in FIG. 7, the browser scrolls up the page in response to the upward sliding event.

For another example, in a scenario in which the user browses a web page by using a browser, if the mid-air gesture is a downward wave of the hand or a transitional downward move of the hand, the mobile phone generates a downward sliding event based on the gesture type of the downward wave or the transitional downward move. The browser application may scroll down the page in response to the downward sliding event.

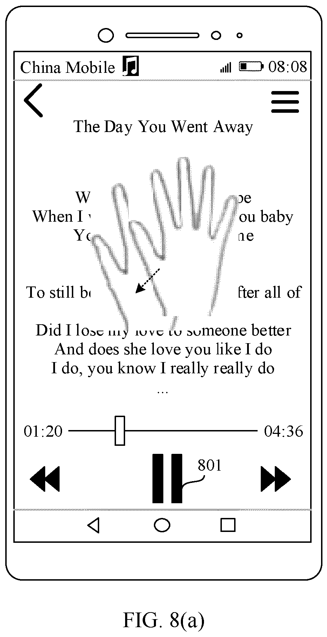

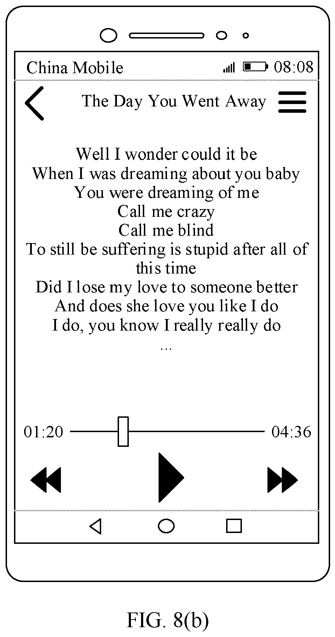

For another example, in a music playing scenario shown in FIG. 8(a), the mid-air gesture is that the palm of the user presses toward the mobile phone (or that the palm approaches the mobile phone, or the palm slaps toward the mobile phone) once, a general-purpose input event is a single tapping event, and a plurality of controls on a current interface of a music player may respond to the single tapping event, for example, a Previous control, a Pause control, and a Next control. In a technical solution, according to the preset policy, a control at a preset location (for example, a Previous control at the leftmost on the touchscreen) may respond to the single tapping event. In another technical solution, according to the preset policy, the preset control (for example, a Pause control 801) may respond to the tapping event. For a schematic diagram of pausing, refer to FIG. 8(b).

In another technical solution, according to the preset policy, the mobile phone may further respond to the general-purpose input event with reference to a location at which the mid-air gesture occurs. For example, when the location at which the mid-air gesture occurs is close to the Pause control, the Pause control responds to the single tapping event; when the location at which the mid-air gesture occurs is close to the Previous control, the Previous control responds to the single tapping event; or when the location at which the mid-air gesture occurs is close to the Next control, the Next control responds to the single tapping event. For example, for the mid-air gesture that the palm of the user presses toward the mobile phone, the Pause control that is on the application interface of the mobile phone and that is most close to a projection of a center of gravity of the hand on the touchscreen may respond to the single tapping event.

In still another technical solution, according to the preset policy, the mobile phone may further respond to the single tapping event with reference to a current status of a foreground running application. For example, the current interface of the music player includes a play control. If the music player is currently in a music playing state, the mobile phone pauses music playing when the play control responds to the single tapping event. If the music player currently is not in a music playing state, the mobile phone plays music when the play control responds to the single tapping event.

For another example, in the music playing scenario shown in FIG. 8(a), if the mid-air gesture is a gesture of a rightward wave of the hand (or a rightward transitional move of the hand) of the user, the general-purpose input event is a rightward sliding event, and the music player responds to the rightward sliding event to fast-forward play progress of the current music; or if the mid-air gesture is a gesture of a leftward wave of the hand (or a leftward transitional move of the hand) of the user, the general-purpose input event is a leftward sliding event, and the music player responds to the leftward sliding event to rewind play progress of the current music.

It should be noted that a scenario in which the mobile phone generates and responds to the general-purpose input event based on the mid-air gesture is not limited to the browser scenario and the music playing scenario listed above, and may further be a plurality of other use scenarios.

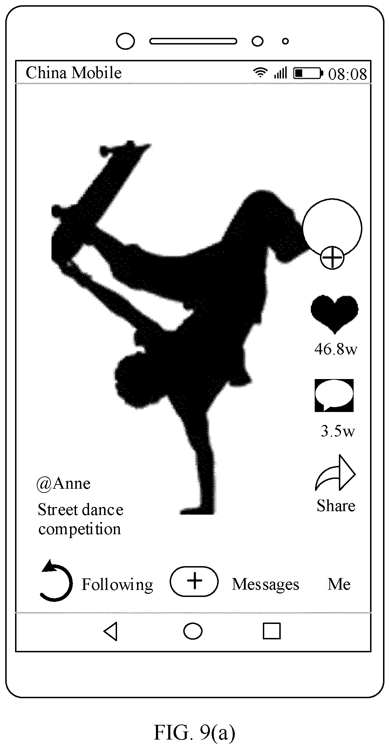

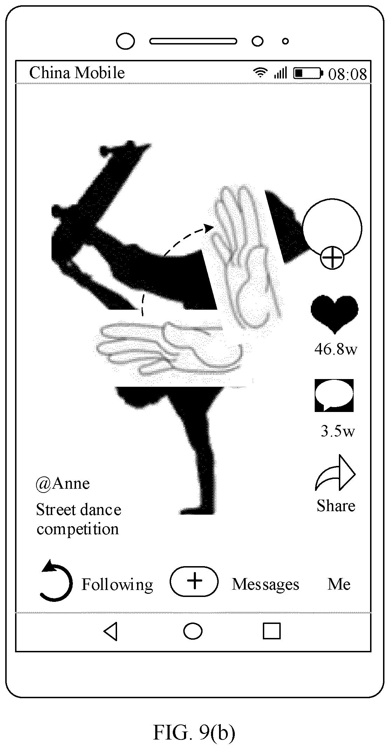

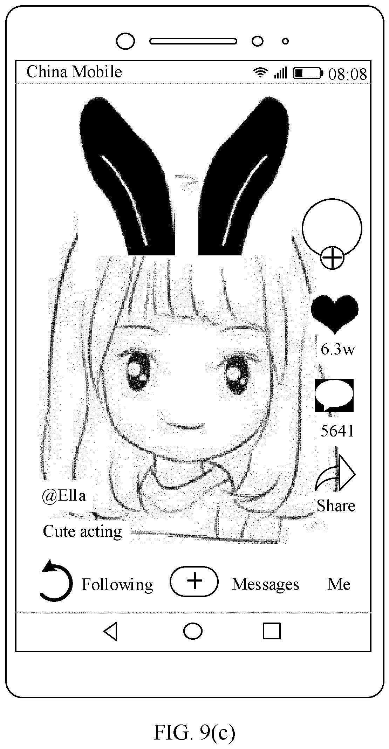

For example, in a scenario in which the user plays a short video in Tik Tok (Tik Tok) shown in FIG. 9(a), with reference to FIG. 9(b), if the mobile phone detects a mid-air gesture of an upward wave of the hand (or an upward transitional move of the hand) of the user, the mobile phone may determine that the gesture type is the upward wave (or the upward transitional move), to generate a corresponding upward sliding event. With reference to FIG. 9(c), Tik Tok responds to the upward sliding event to play another short video.

If the mobile phone detects a mid-air gesture of a downward wave of the hand (or a downward transitional move of the hand) of the user, the mobile phone may determine that the gesture type is the downward wave (or the downward transitional move), to generate a corresponding downward sliding event. In this case, Tik Tok responds to the downward sliding event to play another short video.

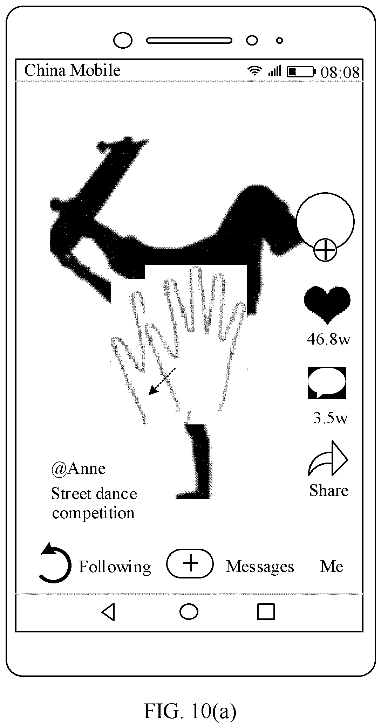

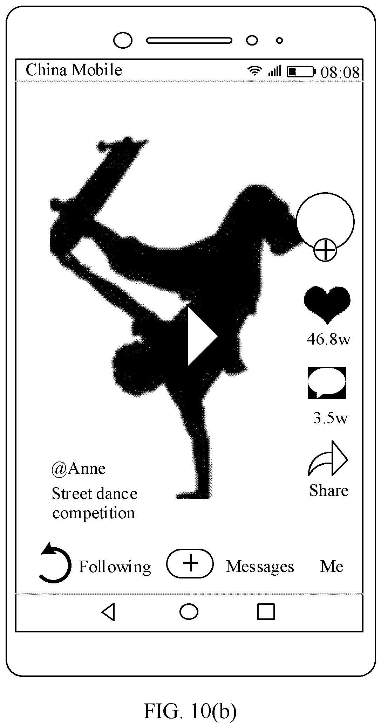

For another example, in a scenario in which the user plays a short video in Tik Tok shown in FIG. 10(a), if the mobile phone detects a mid-air gesture that the palm of the user presses toward the mobile phone (or the palm approaches the mobile phone, or the palm slaps toward the mobile phone) once, the mobile phone may determine that the gesture type is one slap, to generate a corresponding single tapping event. With reference to FIG. 10(b), Tik Tok responds to the single tapping event to pause playing the current short video.

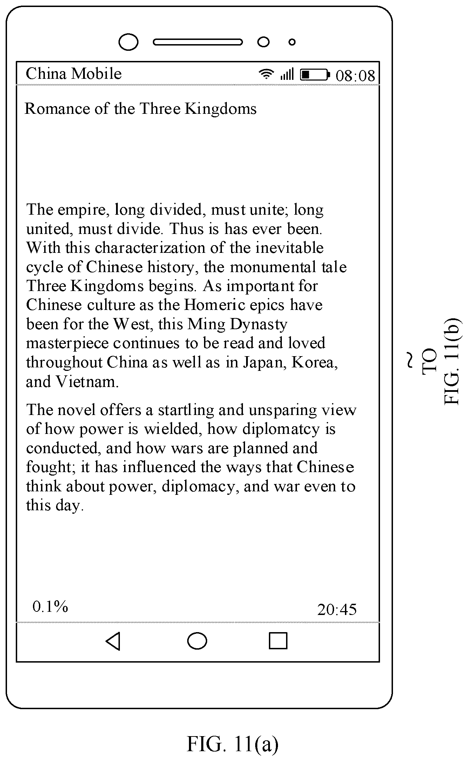

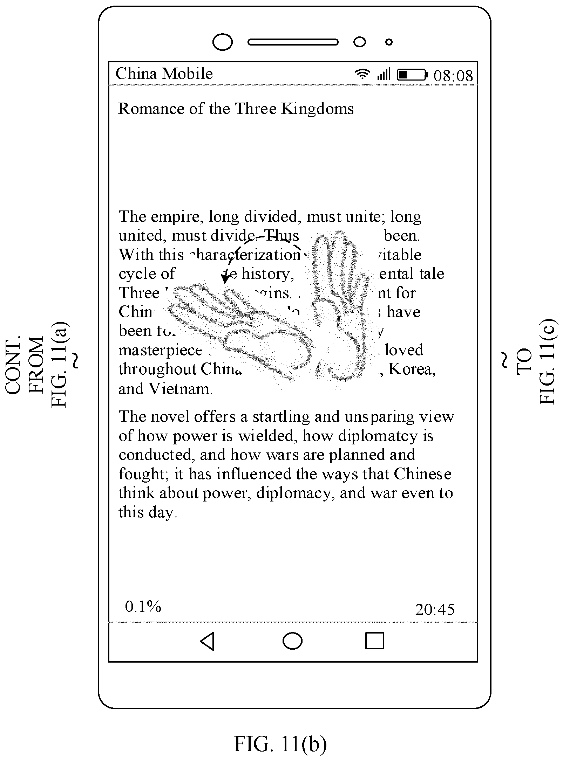

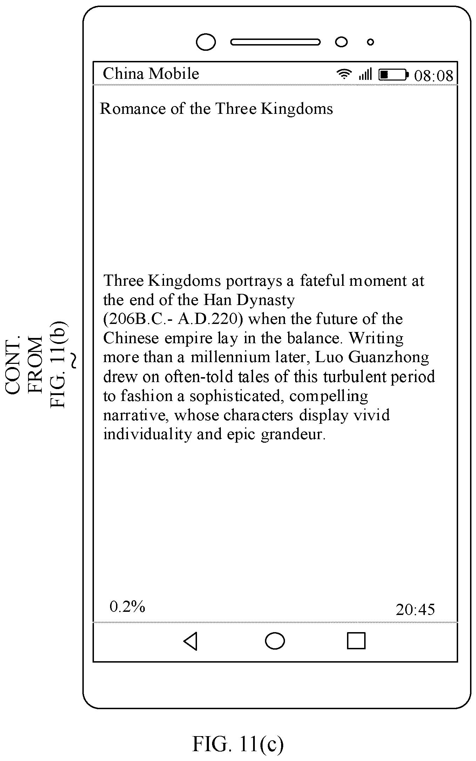

For another example, in a scenario in which the user reads an electronic document by using a reader shown in FIG. 11(a), with reference to FIG. 11(b), if the mobile phone detects a mid-air gesture of a leftward wave of the hand (or a leftward transitional move of the hand) of the user, the mobile phone may determine that the gesture type is the leftward wave (or the leftward transitional move), to generate a corresponding leftward sliding event. With reference to FIG. 11(c), the reader responds to the leftward sliding event to turn a page forward.

If the mobile phone detects a mid-air gesture of a rightward wave of the hand (or a rightward transitional move of the hand) of the user, the mobile phone may determine that the gesture type is the rightward wave (or the rightward transitional move), to generate a corresponding rightward sliding event. The reader responds to the rightward sliding event to turn a page backward.

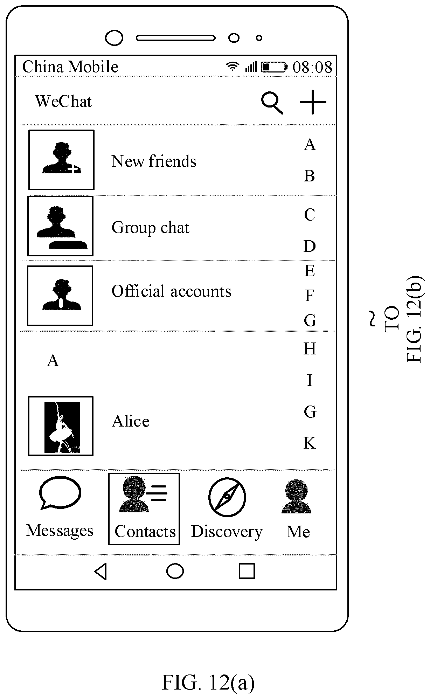

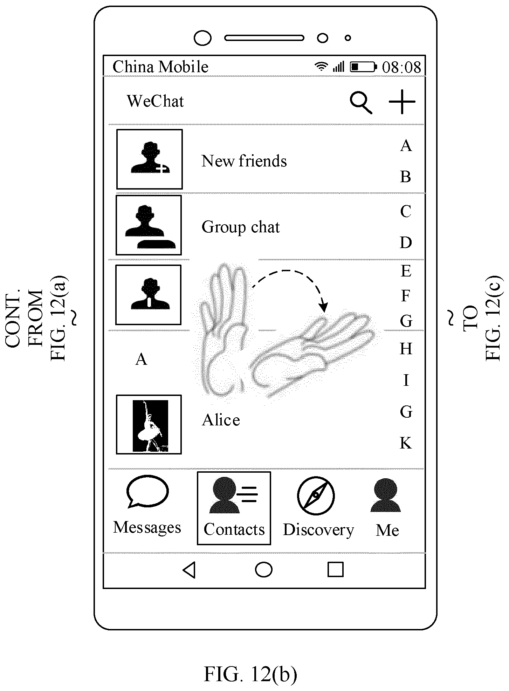

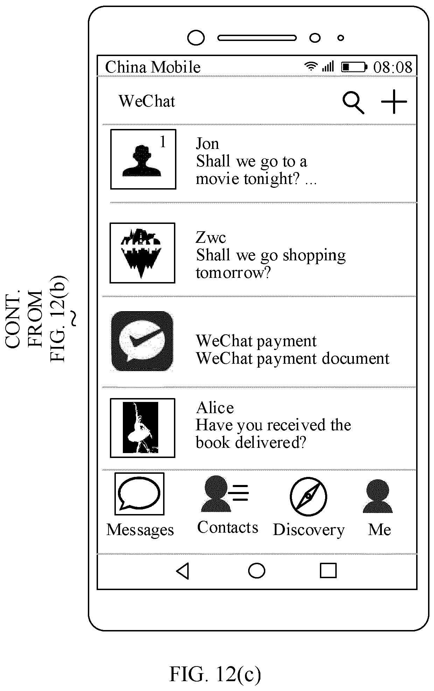

For another example, in a scenario in which the mobile phone displays an interface corresponding to a function "Contacts" in WeChat shown in FIG. 12(a), with reference to FIG. 12(b), if the mobile phone detects a mid-air gesture of a rightward wave of the hand (or a rightward transitional move of the hand) of the user, the mobile phone may determine that the gesture type is the rightward wave (or the rightward transitional move), to generate a corresponding rightward sliding event. With reference to FIG. 12(c), WeChat responds to the rightward sliding event to display an interface corresponding to a function "Messages".

In the scenario shown in FIG. 12(a), if the mobile phone detects a mid-air gesture of a leftward wave of the hand (or a leftward transitional move of the hand) of the user, the mobile phone may determine that the gesture type is the leftward wave (or the leftward transitional move), to generate a corresponding leftward sliding event. In this case, WeChat responds to the leftward sliding event to display an interface corresponding to a function "Discovery".

In addition, in the scenario shown in FIG. 12(a), WeChat may further respond to the upward sliding event or the downward sliding event to scroll a page.

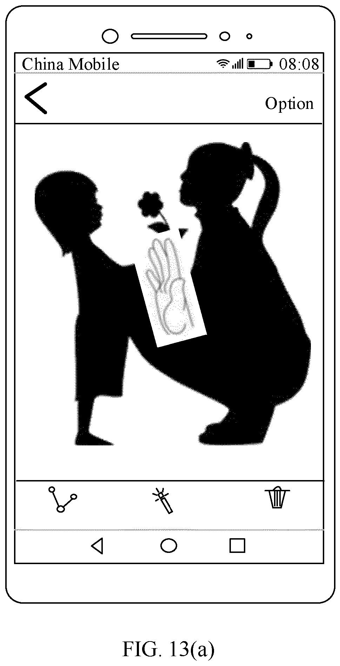

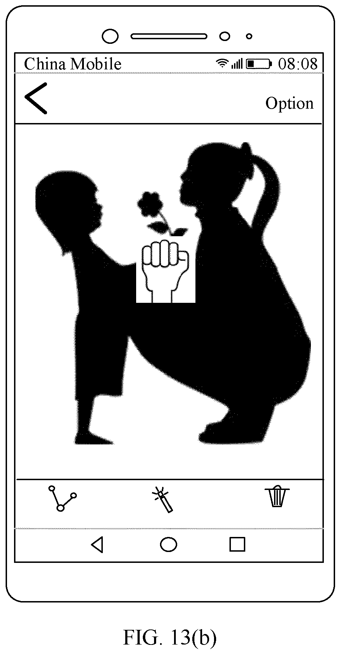

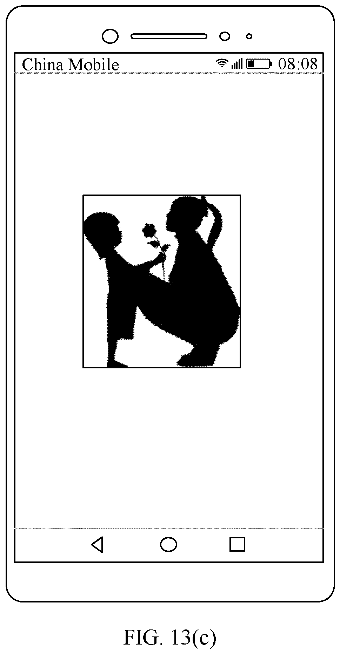

For another example, with reference to FIG. 13(a) and FIG. 13(b), in a scenario in which the user browses a picture by using a gallery (or referred to as an album), if the mobile phone detects a mid-air gesture of a fist of the user, the mobile phone may determine that the gesture type is clutching, to generate a corresponding clutching event. With reference to FIG. 13(c), the gallery responds to the clutching event to scale down a picture.

If the mobile phone detects a mid-air gesture of a rightward wave of the hand of the user, the mobile phone determines that the gesture type is the rightward wave to generate a corresponding rightward sliding event. The gallery responds to the rightward sliding event to display a previous picture. If the mobile phone detects a mid-air gesture of a leftward wave of the hand of the user, the mobile phone determines that the gesture type is the leftward wave, to generate a corresponding leftward sliding event. The gallery responds to the leftward sliding event to display a next picture.

For another example, in a scenario in which the user plays a video by using the YouTube player, the mobile phone may adjust play progress of the video, play the video, pause the playing, and switch to another video based on the mid-air gesture. This is similar to the music playing scenario.

In addition, when the mobile phone detects that the mid-air gesture is a gesture of an upward wave of the hand (or an upward transitional move of the hand) of the user, a general-purpose input event is an upward sliding event. If a location at which the mid-air gesture occurs is close to a right side of the mobile phone, the YouTube player responds to the upward sliding event to turn a volume up. If a location at which the mid-air gesture occurs is close to a left side of the mobile phone, the YouTube player responds to the upward sliding event to turn display brightness up. Similarly, the YouTube player may further turn the volume down and turn the display brightness down based on the mid-air gesture of the user

For another example, in a scenario in which the mobile phone displays an interface 1 of a screen, if the mobile phone detects a mid-air gesture of a leftward wave of the hand (or a leftward transitional move of the hand) of the user, the mobile phone may determine that the gesture type is the leftward wave (or the leftward transitional move), to generate a corresponding leftward sliding event. The mobile phone responds to the leftward sliding event to display an interface 2 of the screen. If the mobile phone detects a mid-air gesture of a rightward wave of the hand (or a rightward transitional move of the hand) of the user, the mobile phone may determine that the gesture type is the rightward wave (or the rightward transitional move), to generate a corresponding rightward sliding event. The mobile phone responds to the rightward sliding event to display an interface 3 of the screen.

In some other embodiments, when the mobile phone displays any interface, if the mobile phone detects a mid-air gesture of a fist of the user, the mobile phone may determine that a gesture type is clutching, to generate a corresponding double tapping screen capture event. The mobile phone responds to the double tapping screen capture event, to capture a current screen to form a picture.

According to the present invention, the mobile phone further displays an operation mark on the touchscreen, to simulate an actual touch operation that is performed by the user on the touchscreen and that corresponds to the mid-air gesture or the general-purpose input event, thereby providing intuitive visual experience for the user. The operation mark is further used to prompt the user with the general-purpose input event to which the mobile phone responds. Then, the mobile phone responds to the general-purpose input event by using a related application. The operation mark may be a static mark, or may be a dynamic mark. The dynamic mark may be a process pictogram.

In a technical solution, a correspondence between a general-purpose input event and an operation mark is preset in the mobile phone. The mobile phone may display the operation mark on the touchscreen based on the general-purpose input event corresponding to the gesture type, to simulate an actual touch operation that is performed by the user on the touchscreen and that corresponds to the general-purpose input event and prompt the user with the general-purpose input event to which the mobile phone responds.

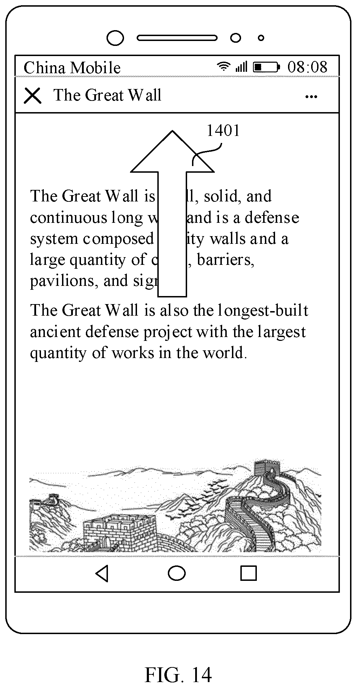

For example, after detecting the mid-air gesture shown in FIG. 5A(a) to FIG. 5A(d), the mobile phone determines that the gesture type of the upward wave corresponds to the upward sliding event. The mobile phone may display an operation mark 1401 shown in FIG. 14, that is, display an upward arrow on the touchscreen, to simulate an upward sliding operation performed by the user on the touchscreen and prompt the user that the upward sliding event is to be responded to. Then, in response to the upward sliding operation, the mobile phone may scroll a page, to display the interface shown in FIG. 7.

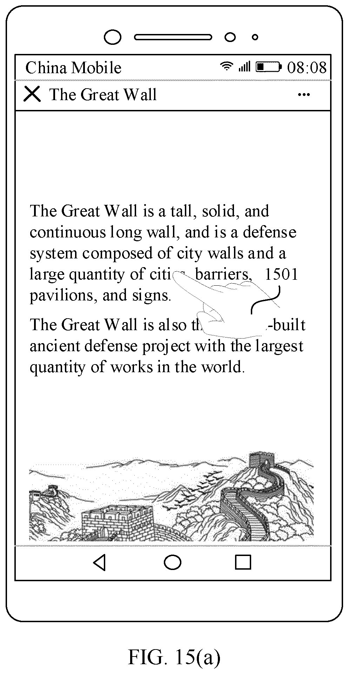

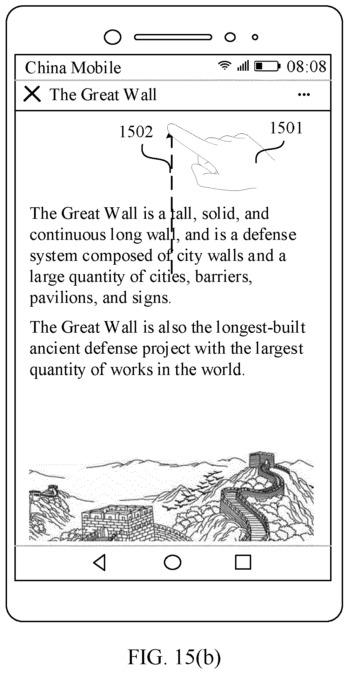

For another example, with reference to FIG. 15(a) and FIG. 15(b), the mobile phone may display a shape 1501 of the hand moving from bottom to top on the touchscreen, and display an upward arrow 1502 corresponding to a moving track of the hand, to simulate an upward sliding operation performed by the user on the touchscreen. Then, in response to the upward sliding operation, the mobile phone may scroll a page, to display the interface shown in FIG. 7.

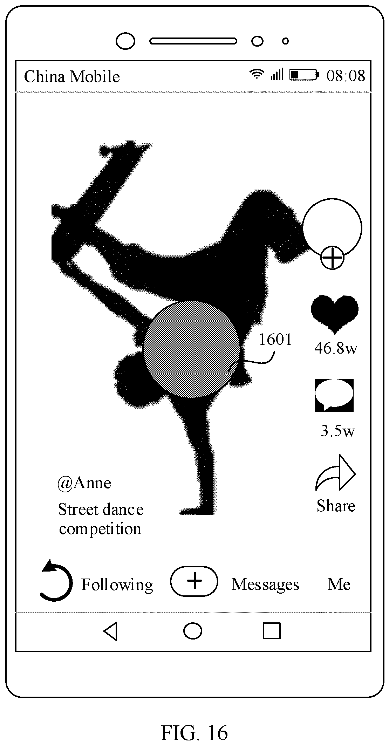

For another example, after detecting the mid-air gesture that the palm of the user presses once toward the mobile phone shown in FIG. 10(a), the mobile phone may determine that a gesture type of one slap corresponds to a single tapping event, and display a circular mark 1601 shown in FIG. 16, to simulate the single tapping operation of the user on the touchscreen and prompt the user that the mobile phone will respond to the single tapping event.

Then, in response to the single tapping operation, the mobile phone pauses playing the current short video, to display the interface shown in FIG. 10(b).

In another technical solution, a correspondence between a gesture type and an operation mark is preset in the mobile phone. The mobile phone may display the operation mark on the touchscreen based on the gesture type, to simulate an actual touch operation that is performed by the user on the touchscreen and that corresponds to the general-purpose input event and prompt the user with the general-purpose input event to which the mobile phone responds. For example, after identifying the mid-air gesture of the upward wave, the mobile phone may display an operation mark or another operation mark on the touchscreen shown in FIG. 14 and FIG. 15(a) and FIG. 15(b).

In still another technical solution, the mobile phone may display the operation mark on the touchscreen based on the down event, the up event, and/or the move event in the general-purpose input event, to simulate an actual touch operation that is performed by the user on the touchscreen and that corresponds to the general-purpose input event and prompt the user with the general-purpose input event to which the mobile phone responds. For example, in correspondence to the down event in the general-purpose input event, the touchscreen displays the shape of the hand; in correspondence to the move event, the hand on the touchscreen moves, and the touchscreen displays a moving track with a direction arrow; and in correspondence to the up event, the touchscreen stops displaying the shape and the moving track of the hand.

In another embodiment of this application, after the gesture information of the mid-air gesture is obtained, the mobile phone may further generate, based on the gesture information, the general-purpose input event combined by using the down event, the up event, and/or the move event. The system application and the third-party application may directly respond to the down event, the up event, and/or the move event, that is, may directly respond to the general-purpose input event combined by using the down event, the up event, and/or the move event, to respond to the mid-air gesture.

Specifically, a preset mapping policy may be set in the mobile phone to determine a mapping relationship between the gesture information and each of the down event, the up event, and/or the move event. For example, in a mapping policy, based on the gesture information, the mobile phone detects that a moment at which the hand appears corresponds to a moment at which a down event occurs, and a projection location of a preset part of the hand (for example, a center of gravity of the hand, a fingertip of a forefinger, or a part of the hand that is first detected by the mobile phone) on the touchscreen (for example, (x0, y0) on the touchscreen) corresponds to a location at which the down event occurs. If the hand moves, a hand moving process corresponds to a process in which the move event occurs (that is, a series of move events are received), and a preset proportional relationship exists between a moving distance of the hand and a moving distance in the move event. Then, a moment at which the mobile phone no longer detects the preset part of the hand corresponds to a moment at which the up event occurs, and a projection location (for example, (x1, y1) on the touchscreen) of the preset part finally on the touchscreen corresponds to a moment at which the up event occurs. The down event, the up event, and/or the move event mapping the gesture information are/is combined into the general-purpose input event. These general-purpose input events may be the general-purpose input events described in the foregoing embodiments, for example, the single tapping event, the upward sliding event, the clutching event, the multi-touch event, and the fast upward sliding event.

The foregoing embodiments are mainly described by using an example in which the electronic device is a mobile phone, and the general-purpose input event generated by the mobile phone based on the mid-air gesture is an input event that corresponds to the touch operation performed by the user on the touchscreen and to which both the system application and the third-party application can directly respond.

In another embodiment, the general-purpose input event may alternatively be another input event. For example, the general-purpose input event generated by the mobile phone based on the mid-air gesture is an input event that corresponds to the operation of pressing the physical button (for example, a power button) by the user on the mobile phone and to which both the system application and the third-party application can directly respond. For example, an infrared sensor is disposed around the power button. When the infrared sensor disposed around the power button detects a mid-air gesture of a slap perform by the hand on a side of the mobile phone (that is, approaching the side of the mobile phone), a general-purpose input event of pressing the power button is generated.

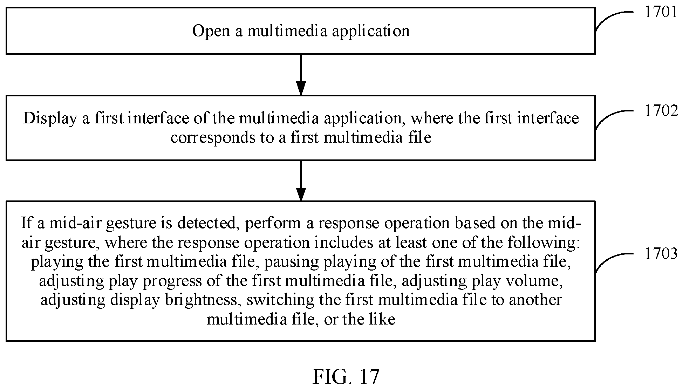

FIG. 17 shows the gesture processing method of the present invention which is applied to an electronic device in the form of a mobile phone. A display and a detection component are disposed on the electronic device. The display may be configured to display an interface. The detection component may be configured to detect a mid-air gesture. The detection component includes any one or any combination of the following: a camera, an infrared sensor disposed below the display, an ultrasonic sensor disposed below the display, an electromagnetic induction component disposed below the display, or the like. As shown in FIG. 17, the method includes the following steps:

1701. The electronic device opens a multimedia application.

For example, the multimedia application may be an audio application (for example, a music player), a video player (for example, a video player such as Tik Tok), or a gallery.

1702. The electronic device displays a first interface of the multimedia application. The first interface corresponds to a first multimedia file.

1703. If the electronic device detects a mid-air gesture, the electronic device performs a response operation based on the mid-air gesture.

The response operation may include at least one of the following: playing the first multimedia file, pausing playing of the first multimedia file, adjusting play progress of the first multimedia file, adjusting play volume, adjusting display brightness, switching the first multimedia file to another multimedia file, or the like. In other words, the electronic device may perform the response operation by using the multimedia application. The multimedia application may be a system application or a third-party application.

In this way, the user may use the mid-air gesture to control the system multimedia application or the third-party multimedia application in the electronic device to perform a corresponding playing control operation, thereby improving user experience.

Based on the foregoing descriptions of the implementations, a person skilled in the art may clearly understand that for the purpose of convenient and brief descriptions, division into the foregoing functional modules is merely used as an example for description. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, and may be located in one place, or may be distributed on different places. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

## Claims

1. A mobile phone (100), comprising:
one or more processors (110);
one or more memories (121);
one or more multimedia applications, wherein the multimedia application comprises an audio application or a video application;
one or more computer programs;
a display (194), configured to display an interface;
a touch sensor (180K), wherein the touch sensor and the display (194) form a touchscreen; and
a detection component (180), configured to detect a mid-air gesture made by a user when the user is not in contact with the mobile phone (100), wherein the detection component (180) comprises any one or any combination of the following: a camera, an infrared sensor disposed below the display (194), an ultrasonic sensor (180F) disposed below the display (194), or an electromagnetic induction component disposed below the display (194), wherein
the one or more computer programs are stored in the memory (121), the one or more computer programs comprise instructions, and when the instructions are executed by the processor (110), the mobile phone (100) is enabled to perform the following steps:
displaying (1702) a first interface of the multimedia application after the multimedia application is opened, wherein the first interface corresponds to a first multimedia file; and
if (1703) the detection component detects the mid-air gesture, generating a general-purpose input event based on the mid-air gesture, wherein the general-purpose input event is an input event corresponding to a contact operation performed by a user on the mobile phone;
performing a response operation based on the general-purpose input event,
wherein
the response operation comprises at least one of the following: playing the first multimedia file, pausing playing of the first multimedia file, adjusting play progress of the first multimedia file, adjusting play volume, adjusting display brightness, or switching the first multimedia file to another multimedia file, and
**characterized in that** when the instructions are executed by the processor (110), the mobile phone (100) is further enabled to perform the following step:
after the detection component detects the mid-air gesture, displaying an operation mark on the touchscreen corresponding to the mid-air gesture, wherein the operation mark is used to simulate an actual touch operation that is performed by the user on the touchscreen and that corresponds to the mid-air gesture, and prompts the user with the general-purpose input event to which the mobile phone (100) responds.

2. The mobile phone (100) according to claim 1, wherein the mid-air gesture is a wave of a hand or a translational move of a hand, and the response operation comprises: turning the play volume down, turning the display brightness up, turning the display brightness down, or switching the first multimedia file to another multimedia file.

3. The mobile phone (100) according to claim 2, wherein the multimedia application is a first video player; and the performing a response operation based on the general purpose input event comprises:
performing the response operation based on the mid-air gesture and a location at which the mid-air gesture occurs, wherein
when the mid-air gesture is an upward translational move of a hand or an upward wave of a hand, if the location at which the mid-air gesture occurs is close to a right side of the mobile phone (100), the response operation is turning the play volume up; or if the location at which the mid-air gesture occurs is close to a left side of the mobile phone (100), the response operation is turning the display brightness up;
when the mid-air gesture is a downward translational move of a hand or a downward wave of a hand, if the location at which the mid-air gesture occurs is close to a right side of the mobile phone (100), the response operation is turning the play volume down; or if the location at which the mid-air gesture occurs is close to a left side of the mobile phone (100), the response operation is turning the display brightness down.

4. The mobile phone (100) according to claim 2, wherein the multimedia application is an audio player.

5. The mobile phone (100) according to claim 2, wherein the multimedia application is a second video player; and
when the mid-air gesture is an upward translational move of a hand or an upward wave of a hand, the response operation is switching the first multimedia file to a second multimedia file; or
when the mid-air gesture is a downward translational move of a hand or a downward wave of a hand, the response operation is switching the first multimedia file to a third multimedia file.

6. The mobile phone (100) according to claim 2, wherein the multimedia application is a gallery; and
when the mid-air gesture is a rightward translational move of a hand or a rightward wave of a hand, the response operation is switching the first multimedia file to a second multimedia file; or
when the mid-air gesture is a leftward translational move of a hand or a leftward wave of a hand, the response operation is switching the first multimedia file to a third multimedia file.

7. The mobile phone (100) according to claim 1, wherein the mid-air gesture is a move of a palm toward the mobile phone (100), and the response operation comprises: playing the first multimedia file, pausing playing of the first multimedia file, or switching the first multimedia file to another multimedia file.

8. The mobile phone (100) according to claim 7, wherein the multimedia application is a first video player; the first interface comprises a playing control and a switching control; and the performing a response operation based on the general purpose input event comprises:
performing the response operation based on the mid-air gesture, a location at which the mid-air gesture occurs, and a current status of the first video player,
wherein
when the location at which the mid-air gesture occurs is close to the playing control, and the first multimedia file is currently being played, the response operation is pausing playing of the first multimedia file;
when the location at which the mid-air gesture occurs is close to the playing control, and the first multimedia file is not currently played, the response operation is playing the first multimedia file; or
when the location at which the mid-air gesture occurs is close to the switching control, the response operation is switching the first multimedia file to another multimedia file.

9. The mobile phone (100) according to claim 1, wherein, when the mid-air gesture is a wave of a hand or a translational move of a hand, the general-purpose input event is a sliding event; or
when the mid-air gesture is a move of a palm toward the mobile phone (100), the general-purpose input event is a tapping event.

## Patentansprüche

1. Mobiltelefon (100), das umfasst:
einen oder mehrere Prozessoren (110);
einen oder mehrere Speicher (121);
eine oder mehrere Multimediaanwendungen, wobei die Multimediaanwendung eine Audioanwendung oder eine Videoanwendung umfasst;
ein oder mehrere Computerprogramme;
eine Anzeige (194), die konfiguriert ist, um eine Schnittstelle anzuzeigen;
einen Berührungssensor (180K), wobei der Berührungssensor und die Anzeige (194) einen Berührungsbildschirm ausbilden; und
eine Erkennungskomponente (180), die konfiguriert ist, um eine Geste in der Luft, die durch einen Benutzer getätigt wird, zu erkennen, wenn der Benutzer nicht mit dem Mobiltelefon (100) in Kontakt steht, wobei die Erkennungskomponente (180) ein beliebiges eines oder eine beliebige Kombination der Folgenden umfasst: eine Kamera, einen Infrarotsensor, der unter der Anzeige (194) angeordnet ist, einen Ultraschallsensor (180F), der unter der Anzeige (194) angeordnet ist, oder eine elektromagnetische Induktionskomponente, die unter der Anzeige (194) angeordnet ist, wobei das eine oder die mehreren Computerprogramme in dem Speicher (121) gespeichert sind, das eine oder die mehreren Computerprogramme Anweisungen umfassen, und wenn die Anweisungen durch den Prozessor (110) ausgeführt werden, das Mobiltelefon (100) aktiviert ist, die folgenden Schritte durchzuführen:
Anzeigen (1702) einer ersten Schnittstelle der Multimediaanwendung, nachdem die Multimediaanwendung geöffnet wurde, wobei die erste Schnittstelle einer ersten Multimediadatei entspricht; und
falls (1703) die Erkennungskomponente die Geste in der Luft erkennt, Erzeugen eines Allzweckeingabeereignisses basierend auf der Geste in der Luft, wobei das Allzweckeingabeereignis ein Eingabeereignis, das einem Kontaktvorgang entspricht, der durch einen Benutzer auf dem Mobiltelefon durchgeführt wird, ist;
Durchführen eines Antwortvorgangs basierend auf dem Allzweckeingabeereignis, wobei der Antwortvorgang mindestens eines der Folgenden umfasst: Wiedergeben der ersten Multimediadatei, Anhalten des Wiedergebens der ersten Multimediadatei, Anpassen eines Wiedergabefortschritts der ersten Multimediadatei, Anpassen einer Wiedergabelautstärke, Anpassen einer Anzeigehelligkeit oder Umschalten der ersten Multimediadatei auf eine andere Multimediadatei, und **dadurch gekennzeichnet, dass,** wenn die Anweisungen durch den Prozessor (110) ausgeführt werden, das Mobiltelefon (100) ferner aktiviert ist, den folgenden Schritt durchzuführen:
nachdem die Erkennungskomponente die Geste in der Luft erkannt hat, Anzeigen einer Vorgangsmarkierung auf dem Berührungsbildschirm, die der Geste in der Luft entspricht, wobei die Vorgangsmarkierung verwendet wird, um einen tatsächlichen Berührungsvorgang, der durch den Benutzer auf dem Berührungsbildschirm durchgeführt wird und der der Geste in der Luft entspricht, zu simulieren, und den Benutzer zu dem Allzweckeingabeereignis auffordert, auf das das Mobiltelefon (100) antwortet.

2. Mobiltelefon (100) nach Anspruch 1, wobei die Geste in der Luft ein Handwink oder eine Translationsbewegung einer Hand ist und der Antwortvorgang umfasst: Verringern der Wiedergabelautstärke, Erhöhen der Anzeigehelligkeit, Verringern der Anzeigehelligkeit oder Umschalten der ersten Multimediadatei auf eine andere Multimediadatei.

3. Mobiltelefon (100) ach Anspruch 2, wobei die Multimediaanwendung eine erste Videowiedergabeeinrichtung ist; und das Durchführen eines Antwortvorgangs basierend auf dem Allzweckeingabeereignisses umfasst:
Durchführen des Antwortvorgangs basierend auf der Geste in der Luft und einer Stelle, an der die Geste in der Luft auftritt, wobei wenn die Geste in der Luft eine nach oben gerichtete Translationsbewegung einer Hand oder ein nach oben gerichteter Handwink ist, falls die Stelle, an der die Geste in der Luft auftritt, nahe einer rechten Seite des Mobiltelefons (100) liegt, der Antwortvorgang darin besteht, die Wiedergabelautstärke zu erhöhen; oder falls die Stelle, an der die Geste in der Luft auftritt, nahe einer linken Seite des Mobiltelefons (100) liegt, der Antwortvorgang darin besteht, die Anzeigehelligkeit zu erhöhen;
wenn die Geste in der Luft eine nach unten gerichtete Translationsbewegung einer Hand oder ein nach unten gerichteter Handwink ist, falls die Stelle, an der die Geste in der Luft auftritt, nahe einer rechten Seite des Mobiltelefons (100) liegt, der Antwortvorgang darin besteht, die Wiedergabelautstärke zu verringern; oder falls die Stelle, an der die Geste in der Luft auftritt, nahe einer linken Seite des Mobiltelefons (100) liegt, der Antwortvorgang darin besteht, die Anzeigehelligkeit zu verringern.

4. Mobiltelefon (100) nach Anspruch 2, wobei die Multimediaanwendung eine Audiowiedergabeeinrichtung ist.

5. Mobiltelefon (100) nach Anspruch 2, wobei die Multimediaanwendung eine zweite Videowiedergabeeinrichtung ist; und
wenn die Geste in der Luft eine nach oben gerichtete Translationsbewegung einer Hand oder ein nach oben gerichteter Handwink ist, der Antwortvorgang darin besteht, von der ersten Multimediadatei auf eine zweite Multimediadatei umzuschalten; oder wenn die Geste in der Luft eine nach unten gerichtete Translationsbewegung einer Hand oder ein nach unten gerichteter Handwink ist, der Antwortvorgang darin besteht, von der ersten Multimediadatei auf eine dritte Multimediadatei umzuschalten.

6. Mobiltelefon (100) nach Anspruch 2, wobei die Multimediaanwendung eine Galerie ist; und wenn die Geste in der Luft eine nach rechts gerichtete Translationsbewegung einer Hand oder ein nach rechts gerichteter Handwink ist, der Antwortvorgang darin besteht, von der ersten Multimediadatei auf eine zweite Multimediadatei umzuschalten; oder wenn die Geste in der Luft eine nach links gerichtete Translationsbewegung einer Hand oder ein nach links gerichteter Handwink ist, der Antwortvorgang darin besteht, von der ersten Multimediadatei auf eine dritte Multimediadatei umzuschalten.

7. Mobiltelefon (100) nach Anspruch 1, wobei die Geste in der Luft eine Bewegung einer Handfläche in Richtung des Mobiltelefons (100) ist und der Antwortvorgang umfasst: Wiedergeben der ersten Multimediadatei, Anhalten des Wiedergebens der ersten Multimediadatei oder Umschalten der ersten Multimediadatei auf eine andere Multimediadatei.

8. Mobiltelefon (100) nach Anspruch 7, wobei die Multimediaanwendung eine erste Videowiedergabeeinrichtung ist; die erste Schnittstelle eine Wiedergabesteuerung und eine Umschaltsteuerung umfasst; und das Durchführen eines Antwortvorgangs basierend auf dem Allzweckeingabeereignisses umfasst:
Durchführen des Antwortvorgangs basierend auf der Geste in der Luft, einer Stelle, an der die Geste in der Luft auftritt, und einem aktuellen Status der ersten Videowiedergabeeinrichtung, wobei
wenn die Stelle, an der die Geste in der Luft auftritt, nahe der Wiedergabesteuerung liegt und die erste Multimediadatei aktuell wiedergegeben wird, der Antwortvorgang darin besteht, das Wiedergeben der ersten Multimediadatei anzuhalten;
wenn die Stelle, an der die Geste in der Luft auftritt, nahe der Wiedergabesteuerung liegt und die erste Multimediadatei aktuell nicht wiedergegeben wird, der Antwortvorgang darin besteht, die erste Multimediadatei wiederzugeben; oder wenn die Stelle, an der die Geste in der Luft auftritt, nahe der Umschaltsteuerung liegt, der Antwortvorgang darin besteht, von der ersten Multimediadatei auf eine andere Multimediadatei umzuschalten.

9. Mobiltelefon (100) nach Anspruch 1, wobei, wenn die Geste in der Luft ein Handwink oder eine Translationsbewegung einer Hand ist, das Allzweckeingabeereignis ein Gleitereignis ist; oder
wenn die Geste in der Luft eine Bewegung einer Handfläche in Richtung des Mobiltelefons (100) ist, das Allzweckeingabeereignis ein Tippereignis ist.

## Revendications

1. Téléphone mobile (100), comprenant :
un ou plusieurs processeurs (110) ;
une ou plusieurs mémoires (121) ;
une ou plusieurs applications multimédias, dans lequel l'application multimédia comprend une application audio ou une application vidéo ;
un ou plusieurs programmes informatiques ;
une unité d'affichage (194), configurée pour afficher une interface ;
un capteur tactile (180K), dans lequel le capteur tactile et l'unité d'affichage (194) forment un écran tactile ; et
un composant de détection (180), configuré pour détecter un geste en l'air effectué par un utilisateur lorsque l'utilisateur n'est pas en contact avec le téléphone mobile (100), dans lequel le composant de détection (180) comprend l'un quelconque ou une quelconque combinaison des éléments suivants : une caméra, un capteur infrarouge disposé sous l'unité d'affichage (194), un capteur ultrasonique (180F) disposé sous l'unité d'affichage (194), ou un composant à induction électromagnétique disposé sous l'unité d'affichage (194), dans lequel le ou les programmes informatiques sont stockés dans la mémoire (121), le ou les programmes informatiques comprennent des instructions, et lorsque les instructions sont exécutées par le processeur (110), le téléphone mobile (100) est en mesure de réaliser les étapes suivantes consistant à :
afficher (1702) une première interface de l'application multimédia après l'ouverture de l'application multimédia, dans lequel la première interface correspond à un premier fichier multimédia ; et
si (1703) le composant de détection détecte le geste en l'air, générer un événement de saisie à usage général sur la base du geste en l'air, dans lequel l'événement de saisie à usage général est un événement de saisie correspondant à une opération de contact réalisée par un utilisateur sur le téléphone mobile ;
réaliser une opération de réponse sur la base de l'événement de saisie à usage général, dans lequel
l'opération de réponse comprend au moins l'un parmi les éléments suivants : la lecture du premier fichier multimédia, la pause d'une lecture du premier fichier multimédia, l'ajustement d'une progression de lecture du premier fichier multimédia, l'ajustement d'un volume de lecture, l'ajustement d'une luminosité d'unité d'affichage, ou le passage du premier fichier multimédia à un autre fichier multimédia, et **caractérisé en ce que,** lorsque les instructions sont exécutées par le processeur (110), le téléphone mobile (100) est en outre en mesure d'effectuer l'étape suivante consistant à :
après que le composant de détection a détecté le geste en l'air, afficher une marque d'opération sur l'écran tactile correspondant au geste en l'air, dans lequel la marque d'opération est utilisée pour simuler une opération tactile réelle réalisée par l'utilisateur sur l'écran tactile et correspondant au geste en l'air, et indiquer à l'utilisateur l'événement de saisie à usage général auquel le téléphone mobile (100) répond.

2. Téléphone mobile (100) selon la revendication 1, dans lequel le geste en l'air est un signe d'une main ou un mouvement de translation d'une main, et l'opération de réponse comprend : la baisse du volume de lecture, l'augmentation de la luminosité de l'unité d'affichage, la baisse de la luminosité de l'unité d'affichage, ou le passage du premier fichier multimédia à un autre fichier multimédia.

3. Téléphone mobile (100) selon la revendication 2, dans lequel l'application multimédia est un premier lecteur vidéo ; et la réalisation d'une opération de réponse sur la base de l'événement de saisie à usage général comprend :
la réalisation de l'opération de réponse sur la base du geste en l'air et d'un emplacement au niveau duquel le geste en l'air se produit, dans lequel lorsque le geste en l'air est un mouvement de translation vers le haut d'une main ou un signe vers le haut d'une main, si l'emplacement au niveau duquel le geste en l'air se produit est proche d'un côté droit du téléphone mobile (100), l'opération de réponse consiste à augmenter le volume de lecture ; ou si l'emplacement au niveau duquel le geste en l'air se produit est proche d'un côté gauche du téléphone mobile (100), l'opération de réponse consiste à augmenter la luminosité d'unité d'affichage ;
lorsque le geste en l'air est un mouvement de translation vers le bas d'une main ou un signe vers le bas d'une main, si l'emplacement au niveau duquel le geste en l'air se produit est proche d'un côté droit du téléphone mobile (100), l'opération de réponse consiste à baisser le volume de lecture ; ou si l'emplacement au niveau duquel le geste en l'air se produit est proche d'un côté gauche du téléphone mobile (100), l'opération de réponse consiste à réduire la luminosité d'unité d'affichage.

4. Téléphone mobile (100) selon la revendication 2, dans lequel l'application multimédia est un lecteur audio.

5. Téléphone mobile (100) selon la revendication 2, dans lequel l'application multimédia est un second lecteur vidéo ; et
lorsque le geste en l'air est un mouvement de translation vers le haut d'une main ou un signe vers le haut d'une main, l'opération de réponse consiste à passer du premier fichier multimédia à un deuxième fichier multimédia ; ou
lorsque le geste en l'air est un mouvement de translation vers le bas d'une main ou un signe vers le bas d'une main, l'opération de réponse consiste à passer du premier fichier multimédia à un troisième fichier multimédia.

6. Téléphone mobile (100) selon la revendication 2, dans lequel l'application multimédia est une galerie ; et
lorsque le geste en l'air est un mouvement de translation vers la droite d'une main ou un signe vers la droite d'une main, l'opération de réponse consiste à passer du premier fichier multimédia à un deuxième fichier multimédia ; ou
lorsque le geste en l'air est un mouvement de translation vers la gauche d'une main ou un signe vers la gauche d'une main, l'opération de réponse consiste à passer du premier fichier multimédia à un troisième fichier multimédia.

7. Téléphone mobile (100) selon la revendication 1, dans lequel le geste en l'air est un mouvement de la paume vers le téléphone mobile (100), et l'opération de réponse comprend : la lecture du premier fichier multimédia, la pause de la lecture du premier fichier multimédia, ou le passage du premier fichier multimédia à un autre fichier multimédia.

8. Téléphone mobile (100) selon la revendication 7, dans lequel l'application multimédia est un premier lecteur vidéo ; la première interface comprend une commande de lecture et une commande de passage ; et la réalisation d'une opération de réponse sur la base de l'événement de saisie à usage général comprend :
la réalisation de l'opération de réponse sur la base du geste en l'air, d'un emplacement au niveau duquel le geste en l'air se produit et d'un état actuel du premier lecteur vidéo, dans lequel
lorsque l'emplacement au niveau duquel le geste en l'air se produit est proche de la commande de lecture et lorsque le premier fichier multimédia est en cours de lecture, l'opération de réponse consiste à mettre en pause la lecture du premier fichier multimédia ;
lorsque l'emplacement au niveau duquel le geste en l'air se produit est proche de la commande de lecture et lorsque le premier fichier multimédia n'est pas en cours de lecture, l'opération de réponse consiste à lire le premier fichier multimédia ; ou
lorsque l'emplacement au niveau duquel le geste en l'air se produit est proche de la commande de passage, l'opération de réponse consiste à passer du premier fichier multimédia à un autre fichier multimédia.

9. Téléphone mobile (100) selon la revendication 1, dans lequel, lorsque le geste en l'air est un signe d'une main ou un mouvement de translation d'une main, l'événement de saisie à usage général est un événement de glissement ; ou lorsque le geste en l'air est un mouvement d'une paume vers le téléphone mobile (100), l'événement de saisie à usage général est un événement de tapotement.
